# EUROPÄISCHE PATENTSCHRIFT

(11) **EP 3 424 135 B1**
(45) Veröffentlichungstag und Bekanntmachung des Hinweises auf die Patenterteilung: **07.01.2026**
(21) Anmeldenummer: 17707858.1
(22) Anmeldetag: 28.02.2017
(51) Int. Cl.: H02K 5/12, H02K 5/173, H02K 7/08, F16C 27/06, H02K 7/14, F25B 30/02, H02K 7/04, H02K 9/12

(54) **ELEKTROMOTOR, WÄRMEPUMPE MIT DEM ELEKTROMOTOR, VERFAHREN ZUM HERSTELLEN DES ELEKTROMOTORS UND VERFAHREN ZUM BETREIBEN DES ELEKTROMOTORS**
ELECTRIC MOTOR, HEAT PUMP HAVING THE ELECTRIC MOTOR, METHOD FOR PRODUCING THE ELECTRIC MOTOR, AND METHOD FOR OPERATING THE ELECTRIC MOTOR
MOTEUR ÉLECTRIQUE, POMPE À CHALEUR DOTÉE DUDIT MOTEUR ÉLECTRIQUE, PROCÉDÉ DE PRODUCTION DU MOTEUR ÉLECTRIQUE ET PROCÉDÉ POUR FAIRE FONCTIONNER LEDIT MOTEUR ÉLECTRIQUE

(30) Priorität: 02.03.2016 DE 102016203411
(43) Veröffentlichungstag der Anmeldung: 09.01.2019
(73) Patentinhaber: Vertiv S.r.l., 35010 Piove di Sacco, (PD) (IT)
(72) Erfinder: KNIFFLER, Oliver, 82054 Sauerlach (DE); SEDLAK, Holger, 82054 Lochhofen/Sauerlach (DE)
(74) Vertreter: Wunderlich & Heim Patentanwälte PartG mbB
(86) Internationale Anmeldenummer: PCT/EP2017/054622
(87) Internationale Veröffentlichungsnummer: WO 2017/148930

(56) Entgegenhaltungen:
- EP-A1- 2 348 614
- EP-A1- 2 800 251
- EP-A1- 2 924 261
- EP-B1- 2 016 349
- DE-A1- 10 301 613
- DE-A1- 4 445 024
- GB-A- 889 280
- JP-A- 2006 109 592
- US-A1- 2009 224 618

## Beschreibung

Die vorliegende Erfindung bezieht sich auf Elektromotoren und insbesondere auf Elektromotoren, die bei sehr hohen Drehzahlen betreibbar sind, wie sie beispielsweise nötig sind, wenn solche Elektromotoren als Verdichtermotoren in Wärmepumpen eingesetzt werden, die mit Wasser als Arbeitsflüssigkeit betrieben werden.

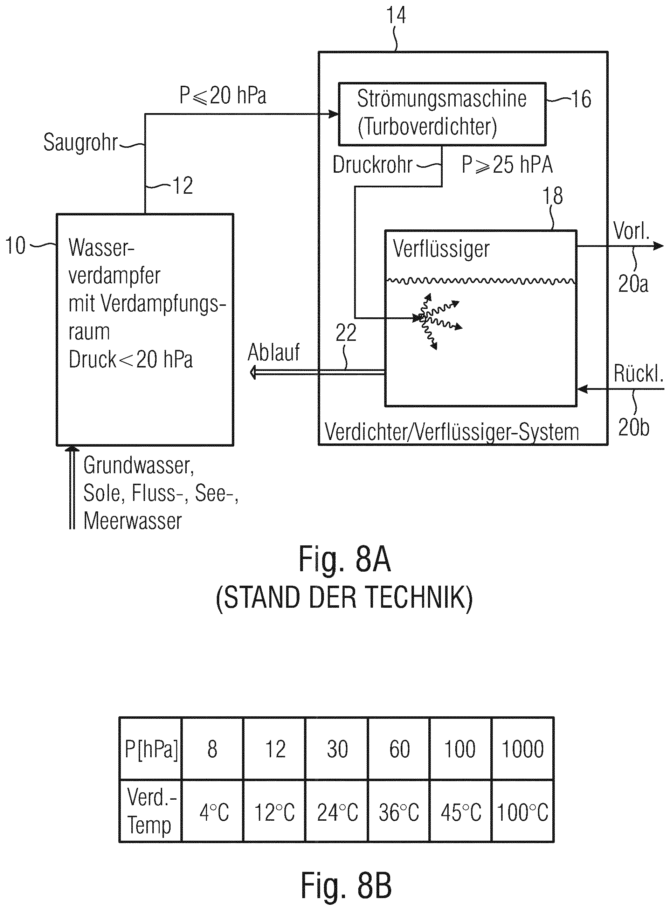

Fig. 8A und Fig. 8B stellen eine Wärmepumpe dar, wie sie in dem europäischen Patent EP 2016349 B1 beschrieben ist. Die Wärmepumpe umfasst zunächst einen Verdampfer 10 zum Verdampfen von Wasser als Arbeitsflüssigkeit, um ausgangsseitig einen Dampf in einer Arbeitsdampfleitung 12 zu erzeugen. Der Verdampfer umfasst einen Verdampfungsraum (in Fig. 8A nicht gezeigt) und ist ausgebildet, um in dem Verdampfungsraum einen Verdampfungsdruck kleiner als 20 hPa zu erzeugen, so dass das Wasser bei Temperaturen unter 15 °C im Verdampfungsraum verdampft. Das Wasser ist z.B. Grundwasser, im Erdreich frei oder in Kollektorrohren zirkulierende Sole, also Wasser mit einem bestimmten Salzgehalt, Flusswasser, Seewasser oder Meerwasser. Es können alle Arten von Wasser, also kalkhaltiges Wasser, kalkfreies Wasser, salzhaltiges Wasser oder salzfreies Wasser verwendet werden. Dies liegt daran, dass alle Arten von Wasser, also alle diese "Wasserstoffe", die günstige Wasser-Eigenschaft haben, nämlich dass Wasser, das auch als "R 718" bekannt ist, ein für den Wärmepumpen-Prozess nutzbares Enthalpie-Differenz-Verhältnis von 6 hat, was dem mehr als 2-fachen des typischen nutzbaren Enthalpie-Differenz-Verhältnisses von z.B. R134a entspricht.

Der Wasserdampf wird durch die Saugleitung 12 einem Verdichter/Verflüssiger-System 14 zugeführt, das eine Strömungsmaschine wie z.B. einen Radialverdichter, beispielsweise in Form eines Turboverdichters aufweist, der in Fig. 8A mit 16 bezeichnet ist. Die Strömungsmaschine ist ausgebildet, um den Arbeitsdampf auf einen Dampfdruck zumindest größer als 25 hPa zu verdichten. 25 hPa korrespondiert mit einer Verflüssigungstemperatur von etwa 22 °C, was zumindest an relativ warmen Tagen bereits eine ausreichende Heizungs-Vorlauftemperatur einer Fußbodenheizung sein kann. Um höhere Vorlauftemperaturen zu generieren, können Drücke größer als 30 hPa mit der Strömungsmaschine 16 erzeugt werden, wobei ein Druck von 30 hPa eine Verflüssigungstemperatur von 24 °C hat, ein Druck von 60 hPa eine Verflüssigungstemperatur von 36 °C hat, und ein Druck von 100 hPa einer Verflüssigungstemperatur von 45 °C entspricht. Fußbodenheizungen sind ausgelegt, um mit einer Vorlauftemperatur von 45 °C auch an sehr kalten Tagen ausreichend heizen zu können.

Die Strömungsmaschine ist mit einem Verflüssiger 18 gekoppelt, der ausgebildet ist, um den verdichteten Arbeitsdampf zu verflüssigen. Durch das Verflüssigen wird die in dem Arbeitsdampf enthaltene Energie dem Verflüssiger 18 zugeführt, um dann über den Vorlauf 20a einem Heizsystem zugeführt zu werden. Über den Rücklauf 20b fließt das Arbeitsfluid wieder in den Verflüssiger zurück.

Dem energiereichen Wasserdampf kann direkt durch das kältere Heizungswasser die Wärme (-energie) entzogen werden, welche vom Heizungswasser aufgenommen wird, so dass dieses sich erwärmt. Dem Dampf wird hierbei so viel Energie entzogen, dass dieser verflüssigt wird und ebenfalls am Heizungskreislauf teilnimmt.

Damit findet ein Materialeintrag in den Verflüssiger bzw. das Heizungssystem statt, der durch einen Ablauf 22 reguliert wird, derart, dass der Verflüssiger in seinem Verflüssigerraum einen Wasserstand hat, der trotz des ständigen Zuführens von Wasserdampf und damit Kondensat immer unterhalb eines Maximalpegels bleibt.

Wie es bereits ausgeführt worden ist, kann ein offener Kreislauf genommen werden. Das heißt, dass das Wasser, das die Wärmequelle darstellt, direkt ohne Wärmetauscher verdampft wird. Alternativ könnte jedoch auch das zu verdampfende Wasser zunächst über einen Wärmetauscher von einer externen Wärmequelle aufgeheizt werden. Darüber kann, um auch Verluste für den zweiten Wärmetauscher, der auf Verflüssiger-Seite bisher notwendigerweise vorhanden ist, zu vermeiden, auch dort das Medium direkt verwendet, werden, wenn an ein Haus mit Fußbodenheizung gedacht wird, das Wasser, das von dem Verdampfer stammt, direkt in der Fußbodenheizung zirkulieren zu lassen.

Alternativ kann jedoch auch auf Verflüssiger-Seite ein Wärmetauscher angeordnet werden, der mit dem Vorlauf 20a gespeist wird und der den Rücklauf 20b aufweist, wobei dieser Wärmetauscher das im Verflüssiger befindliche Wasser abkühlt und damit eine separate Fußbodenheizungsflüssigkeit, die typischerweise Wasser sein wird, aufheizt.

Aufgrund der Tatsache, dass als Arbeitsmedium Wasser verwendet wird, und aufgrund der Tatsache, dass von dem Grundwasser nur der verdampfte Anteil in die Strömungsmaschine eingespeist wird, spielt der Reinheitsgrad des Wassers keine Rolle. Die Strömungsmaschine wird, genauso wie der Verflüssiger und die ggf. direkt gekoppelte Fußbodenheizung immer mit destilliertem Wasser versorgt, derart, dass das System im Vergleich zu heutigen Systemen einen reduzierten Wartungsaufwand hat. Anders ausgedrückt ist das System selbstreinigend, da dem System immer nur destilliertes Wasser zugeführt wird und das Wasser im Ablauf 22 somit nicht verschmutzt ist.

Darüber hinaus sei darauf hingewiesen, dass Strömungsmaschinen die Eigenschaften haben, dass sie - ähnlich einer Flugzeugturbine - das verdichtete Medium nicht mit problematischen Stoffen, wie beispielsweise Öl, in Verbindung bringen. Stattdessen wird der Wasserdampf lediglich durch die Turbine bzw. den Turboverdichter verdichtet, jedoch nicht mit Öl oder einem sonstigen die Reinheit beeinträchtigenden Medium in Verbindung gebracht und damit verunreinigt.

Das durch den Ablauf abgeführte destillierte Wasser kann somit - wenn keine sonstigen Vorschriften im Wege stehen - ohne Weiteres dem Grundwasser wieder zugeführt werden. Alternativ kann es jedoch auch z.B. im Garten oder in einer Freifläche versickert werden, oder es kann über den Kanal, sofern dies Vorschriften gebieten - einer Kläranlage zugeführt werden.

Die Kombination von Wasser als Arbeitsmittel mit dem um das 2-fache besseren nutzbaren Enthalpie-Differenz-Verhältnis im Vergleich zu R134a und aufgrund der damit reduzierten Anforderungen an die Geschlossenheit des Systems, und aufgrund des Einsatzes der Strömungsmaschine, durch den effizient und ohne Reinheitsbeeinträchtigungen die erforderlichen Verdichtungsfaktoren erreicht werden, wird ein effizienter und umweltneutraler Wärmepumpenprozess geschaffen.

Fig. 8B zeigt eine Tabelle zur Illustration verschiedener Drücke und den diesen Drücken zugeordneten Verdampfungstemperaturen, woraus sich ergibt, dass insbesondere für Wasser als Arbeitsmedium recht niedrige Drücke im Verdampfer zu wählen sind.

Die DE 4431887 A1 offenbart eine Wärmepumpenanlage mit einem leichtgewichtigen, großvolumigen Hochleistungs-Zentrifugalkompressor. Ein Dampf, der einen Kompressor einer zweiten Stufe verlässt, besitzt eine Sättigungstemperatur, die die Umgebungstemperatur oder diejenige eines verfügbaren Kühlwassers übersteigt, wodurch eine Wärmeabfuhr ermöglicht wird. Der komprimierte Dampf wird von dem Kompressor der zweiten Stufe in die Kondensatoreinheit überführt, die aus einer Schüttschicht besteht, die innerhalb einer Kühlwassersprüheinrichtung an einer Oberseite, die durch eine Wasserzirkulationspumpe versorgt wird, vorgesehen ist. Der komprimierte Wasserdampf steigt in dem Kondensor durch die Schüttschicht an, wo sie in direktem Gegenstromkontakt mit dem nach unten strömenden Kühlwasser gelangt. Der Dampf kondensiert und die latente Wärme der Kondensation, die durch das Kühlwasser absorbiert wird, wird an die Atmosphäre über das Kondensat und das Kühlwasser ausgestoßen, die zusammen aus dem System entfernt werden. Der Kondensor wird kontinuierlich mit nicht kondensierbaren Gasen mittels einer Vakuumpumpe über eine Rohrleitung gespült.

Die WO 2014072239 A1 offenbart einen Verflüssiger mit einer Kondensationszone zum Kondensieren von zu kondensierendem Dampf in einer Arbeitsflüssigkeit. Die Kondensationszone ist als Volumenzone ausgebildet und hat eine seitliche Begrenzung zwischen dem oberen Ende der Kondensationszone und dem unteren Ende. Ferner umfasst der Verflüssiger eine Dampfeinleitungszone, die sich entlang des seitlichen Endes der Kondensationszone erstreckt und ausgebildet ist, um zu kondensierenden Dampf seitlich über die seitliche Begrenzung in die Kondensationszone zuzuführen. Damit wird, ohne das Volumen des Verflüssigers zu vergrößern, die tatsächliche Kondensation zu einer Volumenkondensation gemacht, weil der zu verflüssigende Dampf nicht nur frontal von einer Seite in ein Kondensationsvolumen bzw. in die Kondensationszone eingeleitet wird, sondern seitlich und von allen Seiten. Damit wird nicht nur sichergestellt, dass das zur Verfügung gestellte Kondensationsvolumen bei gleichen äußeren Abmessungen im Vergleich zu einer direkten Gegenstromkondensation vergrößert wird, sondern dass gleichzeitig auch die Effizienz des Kondensators verbessert wird, weil der zu verflüssigende Dampf in der Kondensationszone eine Stromrichtung quer zu der Strömungsrichtung der Kondensationsflüssigkeit aufweist.

Generell problematisch bei Elektromotoren und insbesondere bei Elektromotoren, die bei hohen Drehzahlen betrieben werden, ist die Erwärmung im Lagerbereich. Typischerweise werden Kontaktlager eingesetzt, wie beispielsweise Kugellager oder Wälzlager. Bei solchen Kontaktlagern tritt Reibung auf, die zu einer Verlustleistung führt. Diese Verlustleistung ist zum einen problematisch dahin gehend, dass sie abgeführt werden muss, und ist zum anderen dahin gehend problematisch, dass sie, wenn sie nicht oder nicht ausreichend abgeführt wird, den Lagerverschleiß erhöht und damit die Standzeit des Lagers und des ganzen Elektromotors reduziert.

Gleichzeitig werden die Probleme mit Unwuchten immer größer, je größer die Drehzahlen der Elektromotoren werden. Darüber hinaus steigt aber auch die Verlustleistung immer stärker an, je höher die Drehzahlen sind und auch je höher die Unwuchten sind.

Hohe Drehzahlen werden allerdings benötigt, um bei einigermaßen vertretbarem Volumen eine Wärmepumpe zu betreiben, die Wasser als Arbeitsmedium aufweist. Wasser hat die Eigenschaft, dass Wasser bezogen auf ein bestimmtes Volumen an flüssigem Wasser sehr viel Wasserdampf erzeugt. Dies ist zwar prinzipiell für die gesamte Effizient der Wärmepumpe von Vorteil. Diese hohe Menge an Dampf muss jedoch abgefördert und insbesondere komprimiert werden. Daher werden Verdichtermotoren benötigt, die, wenn sie nicht zu groß werden sollen, mit sehr hohen Drehzahlen laufen müssen, wie beispielsweise mit Drehzahlen größer als 50.000 U/min. Problematisch ist bei solchen schnelllaufenden Motoren jedoch die Lagerverlustleistung und letztendlich die Lagerstandzeit. Je schneller der Motor betrieben wird, desto mehr Verlustleistung erzeugt er und desto kürzer wird seine Standzeit. Alle diese Punkte sind nachteilhaft, weil eine hohe Verlustleistung bedeutet, dass der Wirkungsgrad des Elektromotors reduziert ist. Darüber hinaus führt eine verringerte Standzeit zu höheren Kosten bzw. andererseits, um dennoch eine ausreichende Standzeit zu erreichen, zu extremen Anforderungen an die Bauteile, dahin gehend, dass die Bauteile und insbesondere die Lager, die hohen Verlustleistungen verschleißarm aushalten.

Die JP 2006 109592 offenbart einen Motor der für das Einspritzen von Klebstoff vorgesehen ist und keine hohe Präzision für die Maßtoleranz von Bauteilen erfordert, und bei dem eine lange Taktzeit vermieden werden kann. Der Motor umfasst einen Stator, ein lastseitiges Gehäuse und ein gegenlastseitiges Gehäuse, das an den entgegengesetzten Enden des Stators angebracht ist, ein Lager, das in die in jedem Gehäuse vorgesehene Öffnung eingesetzt ist, und eine Motorwelle, die drehbar zwischen den beiden Lagern gelagert ist. Ein Lagerdeckel, der das Gegenlastseitenlager abdeckt, ist aus einem Federmaterial gebildet, und das Material des Lagerdeckels bzw. das Federmaterial ist an dem Gegenlastseitengehäuse in der Richtung befestigt, um eine Vorspannung mit fester Position auf die Gegenlast aufzubringen Seitenlager, wobei die Öffnung des Gegenlastseitengehäuses teilweise mit einem Teil des Lagerdeckels bzw. mit dem Federmaterial abgedeckt wird.

Weiterer Stand der Technik ist in US 2009/224618 A1, DE 44 45 024 A1 und EP 2 800 251 A1 offenbart.

Die Aufgabe der vorliegenden Erfindung besteht darin, einen verbesserten Elektromotor sowie ein verbessertes Wärmepumpenkonzept mit einem solchen Elektromotor zu schaffen.

Diese Aufgabe wird durch einen Elektromotor nach Patentanspruch 1, eine Wärmepumpe nach Patentanspruch 13, ein Verfahren zum Herstellen des Elektromotors nach Patentanspruch 14 oder ein Verfahren zum Betreiben des Elektromotors nach Patentanspruch 15 gelöst.

Der Elektromotor gemäß der vorliegenden Erfindung umfasst ein Motorgehäuse, eine Motorwelle mit einem ersten Ende und einem zweiten Ende, einen Lagerabschnitt zum Lagern der Motorwelle bezüglich eines Lagerhalters, wobei der Lagerabschnitt näher an dem ersten Ende als an dem zweiten Ende an der Motorwelle angebracht ist. Dies bedeutet, dass die Motorwelle gewissermaßen nur einseitig im Sinne eines Kraglagers gelagert wird. Der Elektromotor umfasst ferner ein anzutreibendes Element, das an dem zweiten Ende der Motorwelle oder näher an dem zweiten Ende der Motorwelle als an dem ersten Ende der Motorwelle angebracht ist. Darüber hinaus ist der Antriebsabschnitt des Elektromotors, also der Bereich, der den Rotor und den Stator aufweist, zwischen dem Lagerabschnitt und dem anzutreibenden Element angeordnet.

Der Lagerhalter ist mit dem Motorgehäuse über eine Federanordnung gekoppelt, die ausgebildet ist, um eine Kipp-Auslenkung des Lagerhalters bezüglich des Motorgehäuses wenigstens um eine, vorzugsweise um zwei Kipp-Achsen, welche senkrecht zu einer Achse der Motorwelle sind, zu erlauben, während vorzugsweise eine translatorische Auslenkung in Richtung der Motorwelle erschwert bzw. vermieden ist.

Durch diese einseitige Anordnung des Elektromotors, der gewissermaßen exzentrisch gelagert wird und nicht, wie üblich, auf beiden Seiten des Schwerpunkts der Welle, wird erreicht, dass der Motor nicht mehr auf einer Achse rotiert, die durch die Lager definiert wird, sondern dass der Motor nunmehr auf seiner Trägheitsachse rotiert. Diese Trägheitsachse würde lediglich im idealen Fall mit der geometrischen Achse der Motorwelle übereinstimmen. Die Trägheitsachse weicht jedoch im realen Fall von der geometrischen Achse ab. Aufgrund der einseitigen Lagerung unter Verwendung des Lagerabschnitts, der mehr an dem ersten Ende als an dem zweiten Ende der Welle angeordnet ist, wird es dem mechanischen System ermöglicht, auf seiner Trägheitsachse zu rotieren. Dies führt jedoch zu einer dauernden Kippung bzw. Kipp-Auslenkung des Lagerabschnitts bezüglich des Gehäuses. Um eine hohe Verlustleistung und damit einen schnellen Verschleiß des Lagerabschnitts zu vermeiden, wird der Lagerhalter erfindungsgemäß mittels einer Federanordnung an dem Motorgehäuse gehalten. Damit kann der Lagerabschnitt aufgrund der Federanordnung dem Kippen der Motorwelle, damit diese auf ihrer Trägheitsachse rotieren kann, nachgeben. Damit wird keine dauernde zusätzliche Kraft auf die Lager ausgeübt, da der gesamte Lagerhalter auslenkbar ist. Damit wird es ermöglicht, dass der Motor kraftfrei bzw. nahezu kraftfrei dreht. Der Lagerabschnitt definiert die axiale und die radiale Position der Motorwelle, hält den Motor jedoch nicht derart starr, dass die Welle nicht um Achsen kippen könnte, die senkrecht zur Achse ist, die mit der Motorwelle zusammenfällt.

Bei bevorzugten Ausführungsbeispielen wird der Lagerabschnitt unter Verwendung von zwei Kugellagern definiert, die relativ nahe aneinander angeordnet sind. Durch den geringen Abstand dieser beiden Kugellager im Lagerabschnitt hat das System relativ geringe Starrkörperresonanzen, und der Motor wird beim Hochfahren durch diese Starrkörperresonanzen hindurchgefahren und wird typischerweise weit oberhalb dieser Starrkörperresonanzen betrieben.

Dies ist möglich, weil der Lagerabschnitt nur auf einer Seite des Massezentrums bzw. des Schwerpunkts des gesamten rotierenden Systems des Motors, das die Motorwelle, den Rotor und das anzutreibende Element umfasst, angeordnet ist, während auf der anderen Seite des Massenzentrums kein Lager ist, das im Betrieb den Rotor bzw. die Motorwelle in Eingriff nimmt. Hier ist bei bevorzugten Ausführungsbeispielen lediglich ein Notlager vorgesehen, das so ausgebildet ist, dass es im normalen Betrieb keinerlei Auswirkung hat, dass also die Motorwelle ohne Berührung mit dem Notlager rotiert, dass jedoch das Notlager lediglich dann "eingreift", wenn der Motor im Betrieb gestoßen wird, wenn also aufgrund von einer äußeren Krafteinwirkung beispielsweise die auf ihrer Trägheitsachse rotierende Motorwelle von dieser Trägheitsachse ausgelenkt wird. Dieses Notlager ist beispielsweise lediglich eine Bohrung in einem Material mit Gleiteigenschaft, wie z. B. Messing, wobei die Bohrung einen größeren Durchmesser hat als die durch die Bohrung verlaufende Motorwelle. Der sich dadurch ergebende Lagerspalt des Notlagers definiert die maximalen Auslenkung der Motorwelle von der geometrischen Achse. Bei kleineren Auslenkungen als der definierten maximalen Achse greift das Notlager nicht ein, berührt also die Motorwelle nicht.

Vorzugsweise wird der Lagerhalter nicht nur mit einer Federanordnung mit dem Motorgehäuse gekoppelt, sondern auch mit einer zusätzlichen Dämpfungsanordnung. Damit wird sichergestellt, dass Schwingungen des Lagerhalters bezüglich des Motorgehäuses, die unerwünscht sind, also die beispielsweise in eine Resonanzüberhöhung gehen würden, unterbunden werden bzw. Resonanzen gedämpft werden. Insbesondere bei einem Stoß auf den Motor ist das Dämpfungssystem nützlich, um relativ zügig die Motorwelle wieder auf ihre Trägheitsachse zurückzubringen. Das Dämpfungssystem hat sich ferner auch beim Hochfahren des Motors, wenn die Motorwelle durch die Starrkörperresonanzen hindurchgefahren wird, besonders bewährt.

Bei bevorzugten Ausführungsbeispielen der vorliegenden Erfindung ist die Federanordnung durch zwei oder mehr, vorzugsweise gleichmäßig über den Umfang eines Kreises verteilte Federbeine ausgeführt. Das Dämpfungssystem wiederum kann durch eines oder mehrere elastische Dämpfungselemente, wie beispielsweise O-Ringe, implementiert werden, die aufgrund der Kipp-Auslenkung des Lagerhalters bezüglich des Motorgehäuses andauernd "durchgewalkt" werden, so dass der Lagerhalter Energie aufgrund einer Schwingung über die an dem Dämpfungselement verrichtete Arbeit gewissermaßen abgeben kann.

Das Federsystem erlaubt dem rotierenden System des Elektromotors der vorliegenden Erfindung, dass dieses auf seiner Trägheitsachse rotiert. Das Federsystem definiert dabei die Position. Das Federsystem überträgt Kräfte auf das stehende und das rotierende System. Im Resonanzfall wird Energie abgebaut, und zwar über das vorzugsweise vorhandene Dämpfungssystem.

Bei Ausführungsbeispielen ist an dem Motorgehäuse ein Sternring außen fest angebracht und über einen O-Ring, der die Dämpfungsanordnung darstellt, mit einem inneren schwingend über die Federanordnung gelagerten Kugellagerhalter verbunden. Diese Schwingungen walken den O-Ring und bauen so Energie ab.

Bevorzugte Ausführungsbeispiele der vorliegenden Erfindung werden nachfolgend Bezug nehmend auf die beiliegenden Zeichnungen detailliert erläutert. Es zeigen:
- Fig. 1: eine schematische Ansicht einer Wärmepumpe mit einer verschränkten Verdampfer/Kondensierer-Anordnung;
- Fig. 2: eine schematische Darstellung einer Wärmepumpe mit konvektiver Wellenkühlung gemäß einem Aspekt;
- Fig. 3: eine schematische Darstellung einer Wärmepumpe mit konvektiver Wellenkühlung einerseits und Motorkühlung gemäß einem weiteren Aspekt andererseits;
- Fig. 4: eine Schnittdarstellung einer Wärmepumpe gemäß einem Ausführungsbeispiel mit konvektiver Wellenkühlung einerseits und Motorkühlung andererseits unter spezieller Berücksichtigung der konvektiven Wellenkühlung;
- Fig. 5: einen Elektromotor gemäß einem Ausführungsbeispiel in schematischer Darstellung;
- Fig. 6: eine detaillierte Darstellung des rotierenden Systems mit Lagerhalter gemäß einem Ausführungsbeispiel der vorliegenden Erfindung;
- Fig. 7A: eine detaillierte Darstellung des rotierenden Systems, das in dem Motorgehäuse angeordnet ist;
- Fig. 7B: eine Detailansicht aus Fig. 7A;
- Fig. 8a: eine schematische Darstellung einer bekannten Wärmepumpe zum Verdampfen von Wasser;
- Fig. 8b: eine Tabelle zur Veranschaulichung von Drücken und Verdampfungstemperaturen von Wasser als Arbeitsflüssigkeit;
- Fig. 9: eine Detaildarstellung des Lagerhalters gemäß einem Ausführungsbeispiel der vorliegenden Erfindung;
- Fig. 10: eine Darstellung des rotierenden Systems samt Lagerhalter mit besonderem Verweis auf ein Kühlsystem zur Lagerkühlung; und
- Fig. 11: einen Querschnitt durch eine Motorwelle mit dem Lagerabschnitt und mit dem Antriebsabschnitt gemäß einem Ausführungsbeispiel der vorliegenden Erfindung.

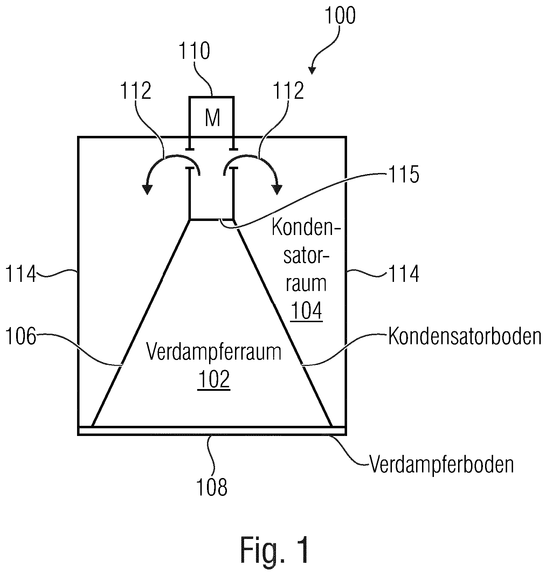

Fig. 1 zeigt eine Wärmepumpe 100 mit einem Verdampfer zum Verdampfen von Arbeitsflüssigkeit in einem Verdampferraum 102. Die Wärmepumpe umfasst ferner einen Kondensator zum Verflüssigen von verdampfter Arbeitsflüssigkeit in einem Kondensatorraum 104, der von einem Kondensatorboden 106 begrenzt ist. Wie es in Fig. 1 gezeigt ist, die als Schnittdarstellung oder als Seitenansicht angesehen werden kann, ist der Verdampferraum 102 zumindest teilweise von dem Kondensatorraum 104 umgeben. Ferner ist der Verdampferraum 102 durch den Kondensatorboden 106 von dem Kondensatorraum 104 getrennt. Darüber hinaus ist der Kondensatorboden mit einem Verdampferboden 108 verbunden, um den Verdampferraum 102 zu definieren. In einer Implementierung ist oberhalb am Verdampferraum 102 oder an anderer Stelle ein Kompressor 110 vorgesehen, der in Fig. 1 nicht näher ausgeführt ist, der jedoch prinzipiell ausgebildet ist, um verdampfte Arbeitsflüssigkeit zu komprimieren und als komprimierten Dampf 112 in den Kondensatorraum 104 zu leiten. Der Kondensatorraum ist ferner nach außen hin durch eine Kondensatorwand 114 begrenzt. Die Kondensatorwand 114 ist ebenfalls wie der Kondensatorboden 106 an dem Verdampferboden 108 befestigt. Insbesondere ist die Dimensionierung des Kondensatorbodens 106 in dem Bereich, der die Schnittstelle zum Verdampferboden 108 bildet, so, dass der Kondensatorboden bei dem in Fig. 1 gezeigten Ausführungsbeispiel vollständig von der Kondensatorraumwand 114 umgeben ist. Dies bedeutet, dass sich der Kondensatorraum, wie es in Fig. 1 gezeigt ist, bis zum Verdampferboden erstreckt, und dass sich der Verdampferraum gleichzeitig sehr weit nach oben, typischerweise nahezu durch fast den gesamten Kondensatorraum 104 erstreckt.

Diese "verschränkte" oder ineinandergreifende Anordnung von Kondensator und Verdampfer, die sich dadurch auszeichnet, dass der Kondensatorboden mit dem Verdampferboden verbunden ist, liefert eine besonders hohe Wärmepumpeneffizienz und erlaubt daher eine besonders kompakte Bauform einer Wärmepumpe. Größenordnungsmäßig ist die Dimensionierung der Wärmepumpe z.B. in einer zylindrischen Form so, dass die Kondensatorwand 114 einen Zylinder mit einem Durchmesser zwischen 30 und 90 cm und einer Höhe zwischen 40 und 100 cm darstellt. Die Dimensionierung kann jedoch je nach erforderliche Leistungsklasse der Wärmepumpe gewählt werden, findet jedoch vorzugsweise in den genannten Dimensionen statt. Damit wird eine sehr kompakte Bauform erreicht, die zudem einfach und günstig herstellbar ist, weil die Anzahl der Schnittstellen, insbesondere für den fast unter Vakuum stehenden Verdampferraum ohne weiteres reduziert werden kann, wenn der Verdampferboden gemäß bevorzugten Ausführungsbeispielen der vorliegenden Erfindung dahin gehend ausgeführt wird, dass er sämtliche Flüssigkeits-Zu- und Ableitungen umfasst und damit keine Flüssigkeits-Zu- und Ableitungen von der Seite oder von oben nötig sind.

Ferner sei darauf hingewiesen, dass die Betriebsrichtung der Wärmepumpe so ist, wie sie in Fig. 1 gezeigt ist. Dies bedeutet, dass der Verdampferboden im Betrieb den unteren Abschnitt der Wärmepumpe definiert, jedoch abgesehen von Verbindungsleitungen mit anderen Wärmepumpen oder zu entsprechenden Pumpeneinheiten. Dies bedeutet, dass im Betrieb der im Verdampferraum erzeugte Dampf nach oben steigt und durch den Motor umgelenkt wird und von oben nach unten in den Kondensatorraum eingespeist wird, und dass die Kondensatorflüssigkeit von unten nach oben geführt wird, und dann von oben in den Kondensatorraum zugeführt wird und dann im Kondensatorraum von oben nach unten fließt, wie beispielsweise durch einzelne Tröpfchen oder durch kleine Flüssigkeitsströme, um mit dem vorzugsweise quer zugeführten komprimierten Dampf zu Zwecken einer Kondensation zu reagieren.

Diese ineinander "verschränkte" Anordnung, dahin gehend, dass der Verdampfer fast vollständig oder sogar vollständig innerhalb des Kondensators angeordnet ist, ermöglicht eine sehr effiziente Ausführung der Wärmepumpe mit optimaler Platzausnutzung. Nachdem der Kondensatorraum sich bis zum Verdampferboden hin erstreckt, ist der Kondensatorraum innerhalb der gesamten "Höhe" der Wärmepumpe oder zumindest innerhalb eines wesentlichen Abschnitts der Wärmepumpe ausgebildet. Gleichzeitig ist jedoch auch der Verdampferraum so groß als möglich, weil er sich ebenfalls nahezu fast über die gesamte Höhe der Wärmepumpe erstreckt. Durch die ineinander verschränkte Anordnung im Gegensatz zu einer Anordnung, bei der der Verdampfer unterhalb des Kondensators angeordnet ist, wird der Raum optimal genutzt. Dies ermöglicht zum einen einen besonders effizienten Betrieb der Wärmepumpe und zum anderen einen besonders platzsparenden und kompakten Aufbau, weil sowohl der Verdampfer als auch der Verflüssiger sich über die gesamte Höhe erstrecken. Damit geht zwar die "Dicke" des Verdampferraums und auch des Verflüssigerraums zurück. Es wurde jedoch herausgefunden, dass die Reduktion der "Dicke" des Verdampferraums, der sich innerhalb des Kondensators verjüngt, unproblematisch ist, weil die Hauptverdampfung im unteren Bereich stattfindet, wo der Verdampferraum nahezu das gesamte Volumen, das zur Verfügung steht, ausfüllt. Andererseits ist die Reduktion der Dicke des Kondensatorraums besonders im unteren Bereich, also dort wo der Verdampferraum nahezu den gesamten zur Verfügung stehenden Bereich ausfüllt, unkritisch, weil die Hauptkondensation oben stattfindet, also dort, wo der Verdampferraum bereits relativ dünn ist und damit ausreichend Platz für den Kondensatorraum zurücklässt. Die ineinander verschränkte Anordnung ist somit optimal dahin gehend, dass jedem Funktionsraum dort das große Volumen gegeben wird, wo dieser Funktionsraum das große Volumen auch benötigt. Der Verdampferraum hat unten das große Volumen, während der Kondensatorraum oben das große Volumen hat. Dennoch trägt auch das entsprechende kleine Volumen, das für den jeweiligen Funktionsraum dort verbleibt, wo der andere Funktionsraum das große Volumen hat, zu einer Effizienzsteigerung bei im Vergleich zu einer Wärmepumpe, bei der die beiden Funktionselemente übereinander angeordnet sind, wie es z.B. in der WO 2014072239 A1 der Fall ist.

Bei bevorzugten Ausführungsbeispielen ist der Kompressor derart an der Oberseite des Kondensatorraums angeordnet, dass der komprimierte Dampf durch den Kompressor einerseits umgelenkt und gleichzeitig in einen Randspalt des Kondensatorraums eingespeist wird. Damit wird eine Kondensation mit besonders hoher Effizienz erreicht, weil eine Querstromrichtung des Dampfes zu einer herabfließenden Kondensationsflüssigkeit erreicht wird. Diese Kondensation mit Querströmung ist besonders im oberen Bereich, wo der Verdampferraum groß ist, wirksam und benötigt im unteren Bereich, wo der Kondensatorraum zugunsten des Verdampferraums klein ist, keinen besonders großen Bereich mehr, um dennoch eine Kondensation von bis zu diesem Bereich vorgedrungenen Dampfpartikeln zu erlauben.

Ein Verdampferboden, der mit dem Kondensatorboden verbunden ist, ist vorzugsweise so ausgebildet, dass er den Kondensator-Zu- und Ablauf und den Verdampfer-Zu- und Ablauf in sich aufnimmt, wobei zusätzlich noch bestimmte Durchführungen für Sensoren in den Verdampfer bzw. in den Kondensator vorhanden sein können. Damit wird erreicht, dass keine Durchführungen von Leitungen für den Kondensator-Zu- und Ablauf durch den nahezu unter Vakuum stehenden Verdampfer nötig sind. Dadurch wird die die gesamte Wärmepumpe weniger fehleranfällig, weil jede Durchführung durch den Verdampfer eine Möglichkeit für ein Leck darstellen würde. Dazu ist der Kondensatorboden an den Stellen, an denen die Kondensator-Zu- und Abläufe sind, mit einer jeweiligen Aussparung versehen, dahin gehend, dass in dem Verdampferraum, der durch den Kondensatorboden definiert wird, keine Kondensator-Zu/Abführungen verlaufen.

Der Kondensatorraum wird durch eine Kondensatorwand begrenzt, die ebenfalls an dem Verdampferboden anbringbar ist. Der Verdampferboden hat somit eine Schnittstelle sowohl für die Kondensatorwand als auch den Kondensatorboden und hat zusätzlich sämtliche Flüssigkeits-Zuführungen sowohl für den Verdampfer als auch den Verflüssiger.

Bei bestimmten Ausführungen ist der Verdampferboden ausgebildet, um Anschlussstutzen für die einzelnen Zuführungen zu haben, die einen Querschnitt haben, der sich von einem Querschnitt der Öffnung auf der anderen Seite des Verdampferbodens unterscheidet. Die Form der einzelnen Anschlussstutzen ist dann so ausgebildet, dass sich die Form bzw. Querschnittsform über der Länge des Anschlussstutzens verändert, jedoch der Rohrdurchmesser, der für die Strömungsgeschwindigkeit eine Rolle spielt, in einer Toleranz von ± 10 % nahezu gleich ist. Damit wird verhindert, dass durch den Anschlussstutzen fließendes Wasser zu kavitieren beginnt. Damit wird aufgrund der guten durch die Formung der Anschlussstutzen erhaltenen Strömungsverhältnisse sichergestellt, dass die entsprechenden Rohre/Leitungen so kurz wie möglich gemacht werden können, was wiederum zu einer kompakten Bauform der gesamten Wärmepumpe beiträgt.

Bei einer speziellen Implementierung des Verdampferbodens wird der Kondensatorzulauf nahezu in Form einer "Brille" in einen zwei- oder mehrteiligen Strom aufgeteilt. Damit ist es möglich, die Kondensatorflüssigkeit im Kondensator an seinem oberen Abschnitt an zwei oder mehreren Punkten gleichzeitig einzuspeisen. Damit wird eine starke und gleichzeitig besonders gleichmäßige Kondensatorströmung von oben nach unten erreicht, die es ermöglicht, dass eine hocheffiziente Kondensation des ebenfalls von oben in den Kondensator eingeführten Dampfes erreicht wird.

Eine weitere kleiner dimensionierte Zuführung im Verdampferboden für Kondensatorwasser kann ebenfalls vorgesehen sein, um damit einen Schlauch zu verbinden, der dem Kompressormotor der Wärmepumpe Kühlflüssigkeit zuführt, wobei zur Kühlung nicht die kalte, dem Verdampfer zugeführte Flüssigkeit verwendet wird, sondern die wärmere, dem Kondensator zugeführte Flüssigkeit, die jedoch immer noch bei typischen Betriebssituationen kühl genug ist, um den Motor der Wärmepumpe zu kühlen.

Der Verdampferboden zeichnet sich dadurch aus, dass er eine Kombinationsfunktionalität hat. Zum einen stellt er sicher, dass keine Kondensatorzuleitungen durch den unter sehr geringem Druck stehenden Verdampfer hindurchgeführt werden müssen. Andererseits stellt er eine Schnittstelle nach außen dar, die vorzugsweise eine kreisrunde Form hat, da bei einer kreisrunden Form möglichst viel Verdampferfläche verbleibt. Alle Zu- und Ableitungen führen durch den einen Verdampferboden und laufen von dort in entweder den Verdampferraum oder den Kondensatorraum. Insbesondere eine Herstellung des Verdampferbodens aus Kunststoffspritzguss ist besonders vorteilhaft, weil die vorteilhaften relativ komplizierten Formgebungen der Zu/Ablaufstutzen in Kunststoffspritzguss ohne weiteres und preisgünstig ausgeführt werden können. Andererseits ist es aufgrund der Ausführung des Verdampferbodens als gut zugängliches Werkstück ohne weiteres möglich, den Verdampferboden mit ausreichender struktureller Stabilität herzustellen, damit er insbesondere dem niedrigen Verdampferdruck ohne weiteres standhalten kann.

In der vorliegenden Anmeldung betreffen gleiche Bezugszeichen gleiche oder gleichwirkende Elemente, wobei nicht alle Bezugszeichen in allen Zeichnungen, sofern sie sich wiederholen, erneut dargelegt werden.

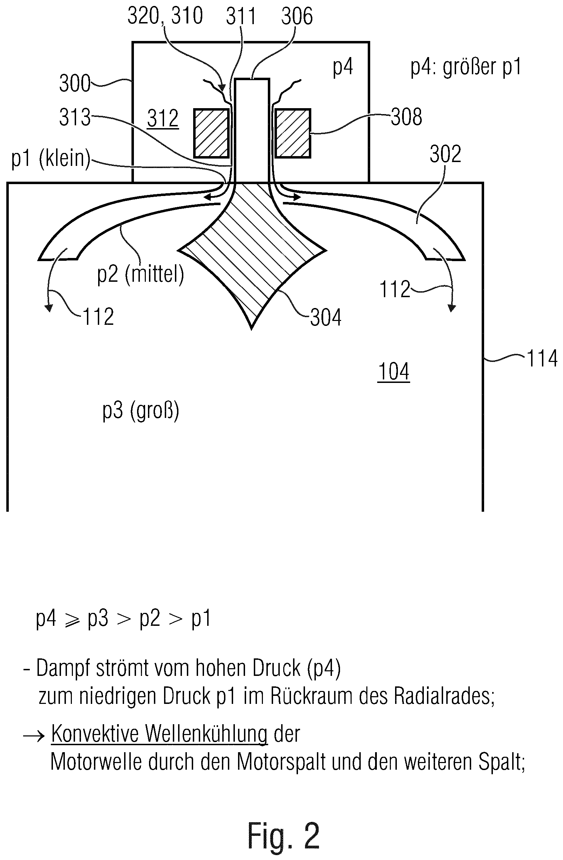

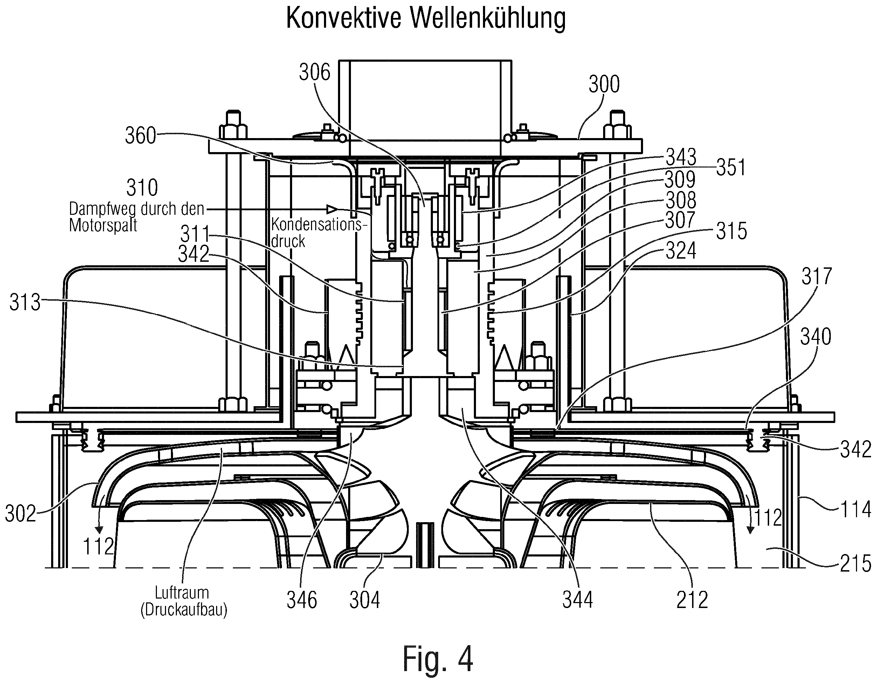

Fig. 2 zeigt eine Wärmepumpe gemäß einem Ausführungsbeispiel in Verbindung mit dem ersten Aspekt, der konvektiven Wellenkühlung. So umfasst die Wärmepumpe von Fig. 2 einen Kondensierer mit einem Kondensierergehäuse 114, der einen Kondensiererraum 104 umfasst. Ferner ist der Verdichtermotor angebracht, welcher durch den Stator 308 schematisch in Fig. 4 dargestellt ist. Dieser Verdichtermotor ist auf in Fig. 2 nicht gezeigte Art und Weise an dem Kondensierergehäuse 114 angebracht und umfasst den Stator und einen Rotor 307, wobei der Rotor 307 eine Motorwelle 306 aufweist, an der ein Radialrad 304 angebracht, das sich in eine Verdampferzone hinein erstreckt, die in Fig. 2 nicht dargestellt ist. Ferner umfasst die Wärmepumpe einen Leitraum 302, der ausgebildet ist, um durch das Radialrad verdichteten Dampf aufzunehmen und in den Kondensierer zu leiten, wie es bei 112 schematisch dargestellt ist.

Ferner umfasst der Motor ein Motorgehäuse 300, das den Verdichtermotor umgibt und vorzugsweise ausgebildet ist, um einen Druck zu halten, der wenigstens gleich dem Druck in dem Kondensierer ist. Alternativ ist das Motorgehäuse ausgebildet, um einen Druck zu halten, der höher als ein mittlerer Druck aus dem Verdampfer und dem Kondensierer ist, oder der höher als der Druck in dem weiteren Spalt 313 zwischen dem Radialrad und dem Leitraum (302) ist, oder der größer oder gleich dem Druck in dem Kondensierer ist. Das Motorgehäuse ist also derart ausgebildet, damit ein Druckabfall vom Motorgehäuse entlang der Motorwelle in Richtung des Leitraums stattfindet, durch den Arbeitsdampf durch den Motorspalt und den weiteren Spalt an der Motorwelle vorbeigezogen wird, um die Welle zu kühlen.

Dieses Gebiet in dem Motorgehäuse mit dem nötigen Druck ist in Fig. 2 bei 312 dargestellt. Außerdem ist eine Dampfzuführung 310 ausgebildet, um Dampf in dem Motorgehäuse 300 zu einem Motorspalt 311 zuzuführen, der zwischen dem Stator 308 und der Welle 306 vorhanden ist. Ferner umfasst der Motor einen weiteren Spalt 313, der sich von dem Motorspalt 311 entlang des Radialrads zu dem Leitraum 302 erstreckt.

Bei der erfindungsgemäßen Anordnung herrscht im Kondensierer ein relativ großer Druck p₃. Dagegen herrscht im Leitweg oder Leitraum 302 ein mittlerer Druck p₂. Der kleinste Druck herrscht, abgesehen vom Verdampfer, hinter dem Radialrad, und zwar dort, wo das Radialrad an der Motorwelle befestigt ist, also in dem weiteren Spalt 313. In dem Motorgehäuse 300 existiert ein Druck p₄, der entweder gleich dem Druck p₃ oder größer als der Druck p₃ ist. Dadurch existiert ein Druckgefälle vom Motorgehäuse zu dem Ende des weiteren Spalts. Dieses Druckgefälle führt dazu, dass eine Dampfströmung durch die Dampfzuführung hindurch in den Motorspalt und den weiteren Spalt bis in den Leitweg 302 stattfindet. Diese Dampfströmung nimmt Arbeitsdampf aus dem Motorgehäuse an der Motorwelle vorbei in den Kondensierer. Diese Dampfströmung sorgt für die konvektive Wellenkühlung der Motorwelle durch den Motorspalt 311 und den weiteren Spalt 313, der sich an den Motorspalt 311 anschließt. Das Radialrad saugt also Dampf nach unten heraus, an der Welle des Motors vorbei. Dieser Dampf wird über die Dampfzuführung, die typischerweise als spezielle ausgeführte Bohrungen implementiert sind, in den Motorspalt hinein gezogen.

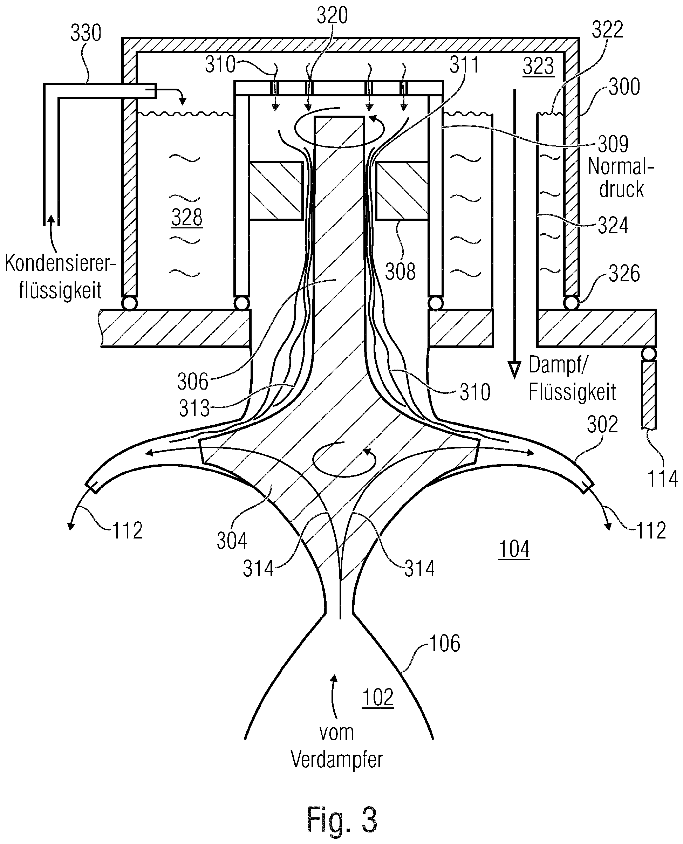

Fig. 3 zeigt eine weitere schematische Ausführungsform der konvektiven Wellenkühlung gemäß dem ersten Aspekt der vorliegenden Erfindung, die dort vorzugsweise mit der Motorkühlung gemäß dem zweiten Aspekt der vorliegenden Erfindung kombiniert ist.

Es sei jedoch an dieser Stelle generell darauf hingewiesen, dass die beiden Aspekte konvektive Wellenkühlung einerseits und Motorkühlung andererseits auch separat voneinander eingesetzt werden. So führt eine Motorkühlung ohne eine spezielle separate konvektive Wellenkühlung bereits zu einer erheblich erhöhten Betriebssicherheit. Darüber hinaus führt auch eine konvektive Motorwellenkühlung ohne die zusätzliche Motorkühlung zu einer erhöhten Betriebssicherheit der Wärmepumpe. Die beiden Aspekte können jedoch, wie es nachfolgend in Fig. 3 dargestellt ist, besonders günstig miteinander verbunden werden, um mit einer besonders vorteilhaften Konstruktion des Motorgehäuses und des Verdichtermotors sowohl die konvektive Wellenkühlung als auch die Motorkühlung zu implementieren, welche zusätzlich noch bei einem weiteren bevorzugten Ausführungsbeispiel jeweils oder gemeinsam durch eine spezielle Kugellagerkühlung ergänzt werden können.

Fig. 3 zeigt ein Ausführungsbeispiel mit kombinierter Verwendung von konvektiver Wellenkühlung und Motorkühlung, wobei bei dem in Fig. 3 gezeigten Ausführungsbeispiel die Verdampferzone bei 102 gezeigt ist. Die Verdampferzone wird von der Kondensiererzone, also von dem Kondensiererbereich 104 durch den Kondensiererboden 106 getrennt. Arbeitsdampf, der schematisch bei 314 dargestellt ist, wird durch das sich drehende schematisch und im Schnitt dargestellte Radialrad 304 angesaugt und in den Leitweg 302 hinein "gepresst". Der Leitweg 302 ist bei dem in Fig. 3 gezeigten Ausführungsbeispiel so ausgebildet, dass sich sein Querschnitt nach außen hin vergrößert. Damit findet eine weitere Dampfkompression statt. Die erste "Stufe" der Dampfkompression findet bereits durch die Drehung des Radialrads und das "Ansaugen" des Dampfs durch das Radialrad statt. Dann jedoch, wenn das Radialrad den Dampf in den Eingang des Leitwegs einspeist, also dort, wo das Radialrad betrachtet nach oben "aufhört", stößt der bereits vorkomprimierte Dampf gewissermaßen auf einen Dampfstau, der aufgrund der Verjüngung des Leitwegs und auch aufgrund der Krümmung des Leitwegs vorhanden ist. Dies führt zu einer weiteren Dampfkompression, so dass schließlich der komprimierte und damit erwärmte Dampf 112 in den Kondensierer strömt.

Fig. 3 zeigt ferner die Dampfzuführungsöffnungen 320, die in einer schematisch dargestellten Motorwand 309 in Fig. 3 ausgeführt sind. Diese Motorwand 309 hat bei dem in Fig. 3 gezeigten Ausführungsbeispiel Bohrungen für die Dampfzuführungsöffnungen 320 im oberen Bereich, wobei diese Bohrungen jedoch an beliebigen Stellen ausgeführt sein können, an denen Dampf in den Motorspalt 311 und damit auch in den weiteren Motorspalt 313 eindringen kann. Die dadurch verursachte Dampfströmung 310 führt zu dem gewünschten Effekt der konvektiven Wellenkühlung.

Das in Fig. 3 gezeigte Ausführungsbeispiel umfasst ferner zur Implementierung der Motorkühlung einen Arbeitsmittelzulauf 330, der ausgebildet ist, um flüssiges Arbeitsmittel aus dem Kondensierer zur Motorkühlung an die Motorwand zu führen. Ferner ist das Motorgehäuse ausgebildet, um in dem Betrieb der Wärmepumpe einen maximalen Flüssigkeitspegel 322 an flüssigem Arbeitsmittel zu halten. Darüber hinaus ist das Motorgehäuse 300 ebenfalls ausgebildet, um oberhalb des maximalen Pegels einen Dampfraum 323 zu bilden. Ferner hat das Motorgehäuse Vorkehrungen, um flüssiges Arbeitsmittel oberhalb des maximalen Pegels in den Kondensierer 104 zu leiten. Diese Ausführung wird bei dem in Fig. 3 gezeigten Ausführungsbeispiel durch einen z. B. flach ausgeführten kanalförmigen Überlauf 324 ausgebildet, der die Dampfabführung bildet und irgendwo in der oberen Kondensiererwand angeordnet ist und eine Länge hat, die den maximalen Pegel 322 definiert. Wird durch die Kondensiererflüssigkeitszuführung 330 zu viel Arbeitsflüssigkeit in das Motorgehäuse, also den Flüssigkeitsbereich 328 eingeführt, so läuft das flüssige Arbeitsmittel durch den Überlauf 324 hindurch in das Kondensierervolumen. Darüber hinaus stellt der Überlauf auch bei der in Fig. 3 gezeigten passiven Anordnung, die z.B. auch alternativ ein Röhrchen mit einer entsprechenden Länge sein kann, einen Druckausgleich zwischen dem Motorgehäuse und insbesondere dem Dampfraum 323 des Motorgehäuses und dem Kondensierer-Innenraum 104 her. Damit ist der Druck im Dampfraum 323 des Motorgehäuses immer nahezu gleich oder höchstens aufgrund eines Druckverlusts entlang des Überlaufs etwas höher als der Druck im Kondensierer. Damit wird der Siedepunkt der Flüssigkeit 328 im Motorgehäuse ähnlich dem Siedepunkt im Kondensierergehäuse sein. Dadurch führt eine Erwärmung der Motorwand 309 aufgrund einer im Motor erzeugten Verlustleistung dazu, dass eine Blasensiedung in dem Flüssigkeitsvolumen 328 stattfindet, die später noch erläutert wird.

Fig. 3 zeigt ferner diverse Abdichtungen in schematischer Form beim Bezugszeichen 326 und an ähnlichen Stellen zwischen dem Motorgehäuse und dem Kondensierergehäuse einerseits oder aber auch zwischen der Motorwand 309 und dem Kondensierergehäuse 114 andererseits. Diese Abdichtungen sollen symbolisieren, dass hier eine flüssigkeits- und druckdichte Verbindung sein soll.

Durch das Motorgehäuse wird ein separater Raum definiert, der jedoch ein nahezu gleiches Druckgebiet wie der Kondensator darstellt. Dies unterstützt aufgrund einer Erwärmung des Motors und der damit abgegebenen Energie an der Motorwand 309 eine Blasensiedung im Flüssigkeitsvolumen 328, die wiederum eine besonders effiziente Verteilung des Arbeitsmittels im Volumen 328 und damit eine besonders gute Kühlung mit einem kleinen Volumen an Kühlflüssigkeit zur Folge hat. Ferner wird sichergestellt, dass mit dem Arbeitsmittel gekühlt wird, das auf der günstigsten Temperatur, nämlich der wärmsten Temperatur in der Wärmepumpe ist. Dadurch wird sichergestellt, dass sämtliche Kondensationsprobleme, die immer an kalten Oberflächen auftreten, sowohl für die Motorwand als auch für die Motorwelle und die Bereiche im Motorspalt 311 und dem weiteren Spalt 313 ausgeschlossen sind. Ferner ist bei dem in Fig. 3 gezeigten Ausführungsbeispiel der für die konvektive Wellenkühlung verwendete Arbeitsmitteldampf 310 Dampf, der sonst im Dampfraum 323 des Motorgehäuses ist. Dieser Dampf hat ebenfalls wie die Flüssigkeit 328 die optimale (warme) Temperatur. Ferner wird durch den Überlauf 324 sichergestellt, dass der Druck im Bereich 323 aufgrund der Blasensiedung, die durch die Motorkühlung bzw. die Motorwand 309 bewirkt wird, nicht über den Kondensiererdruck steigen kann. Ferner wird durch die Dampfabführung die Wärmeenergie aufgrund der Motorkühlung abgeführt. Damit wird die konvektive Wellenkühlung immer gleich arbeiten. Würde nämlich der Druck zu stark ansteigen, so könnte zu viel Arbeitsmitteldampf durch den Motorspalt 311 und den weiteren Spalt 313 gepresst werden.

Obgleich der Elektromotor gemäß der vorliegenden Erfindung besonders gut in der Wärmepumpe einsetzbar ist, wie sie Bezug nehmend auf die Fig. 1 bis 4 dargestellt worden ist, kann der Elektromotor auch für andere Anwendungen eingesetzt werden, bei denen ein kleiner kompakter Motor nötig ist, der zudem bei hohen Drehzahlen betrieben werden kann. Jedoch auch bei niedrigeren Drehzahlen kann der erfindungsgemäße Motor bereits Vorteile bringen.

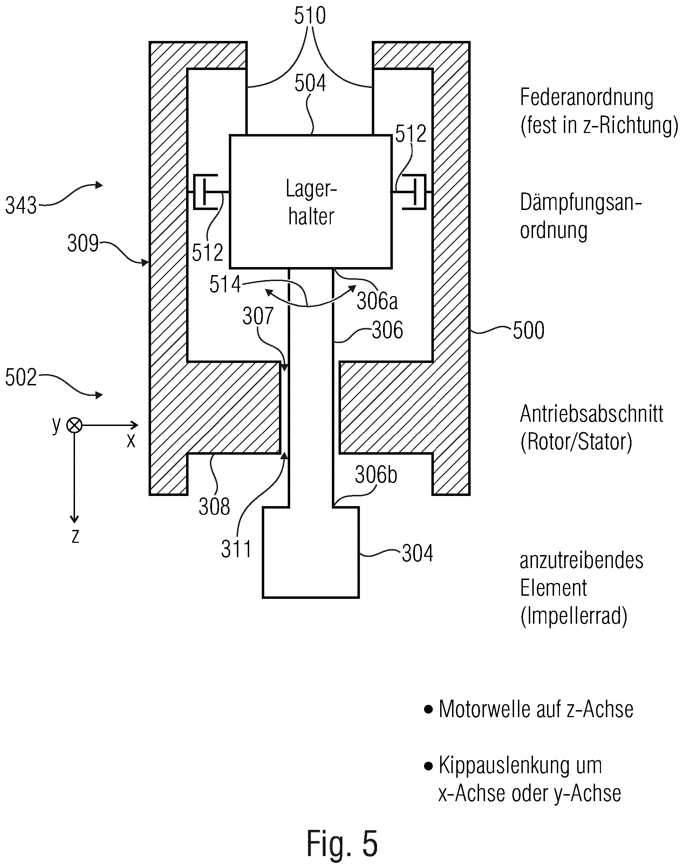

Nachfolgend wird Bezug nehmend auf Fig. 5 ein Elektromotor gemäß einem Ausführungsbeispiel der vorliegenden Erfindung beschrieben, der vorteilhaft als der Elektromotor 110 beispielsweise von Fig. 1 eingesetzt werden kann, oder der auch für andere Anwendungen einsetzbar ist.

Der Elektromotor umfasst eine Motorhülle 500, die den Motor häust. Dagegen ist das Motorgehäuse 300, das in den Fig. 2, 3, 4 dargestellt ist, zusätzlich zu der Motorhülle vorgesehen, um die bestimmten dargelegten Kühlvorrichtungen zu schaffen. Ein Teil der Motorhülle 500 ist die Motorwand 309, die auch in den Fig. 2, 3, 4 dargestellt ist.

Der Elektromotor umfasst ferner eine Motorwelle 306 mit einem ersten Ende 306a und einem zweiten Ende 306b sowie einen Lagerabschnitt 343 zum Lagern der Motorwelle 306 bezüglich eines Lagerhalters 504. Der Lagerabschnitt 343 ist näher an dem ersten Ende 306a als an dem zweiten Ende 306b an der Motorwelle angebracht und insbesondere auf einer Seite bezüglich des Schwerpunkts des rotierenden Systems in Fig. 5. Ferner umfasst das rotierende System ein anzutreibendes Element 304, das beispielsweise als Radialrad oder Impeller ausgeführt sein kann, das jedoch auch als jedes beliebige andere anzutreibende Element implementiert sein kann. Ferner ist ein Antriebsabschnitt 502 vorgesehen, der zwischen dem Lagerabschnitt 343 und dem anzutreibenden Element angeordnet ist und einen Rotor 307 und einen Stator 308 aufweist.

Insbesondere ist der Lagerhalter 504 mit der Motorhülle 500 über eine Federanordnung 510 gekoppelt, wobei die Federanordnung 510 ausgebildet ist, um eine Kipp-Auslenkung 514 des Lagerhalters 504 bezüglich der Motorhülle wenigstens um eine Kipp-Achse, die senkrecht zu einer Achse der Motorwelle 306 ist, zu erlauben, und um eine translatorische Auslenkung in Richtung der Motorwelle zu reduzieren oder zu vermeiden. Bezüglich der in Fig. 5 eingezeichneten Achsen erstreckt sich die Motorwelle 306 entlang der z-Achse. Insbesondere dreht sich die Motorwelle 306 im Betrieb um die z-Achse. Eine Kipp-Auslenkung 514 ist entweder um die y-Achse oder die x-Achse oder vorzugsweise um beide Kipp-Achsen möglich, dahin gehend, dass das rotierende System, das durch die Motorwelle 306, den Rotor 307 und das anzutreibende Element 304 gebildet wird, auf seiner Trägheitsachse rotieren kann. Um dies zu erreichen, sind die Kipp-Auslenkungen 514 nötig. Dagegen ist die Federanordnung 510, die in Fig. 5 beispielsweise als Blattfedern gezeichnet sind, ausgebildet, um starr in der z-Achse zu sein. Vorzugsweise soll die Federanordnung auch die radiale Position des Lagerhalters bezüglich der Motorhülle 500 definieren, dahin gehend, dass tatsächlich eine Kipp-Auslenkung des Lagerhalters, jedoch keine radiale Verschiebung des Lagerhalters stattfindet.

Insbesondere ist bei dem in Fig. 5 gezeigten Ausführungsbeispiel gezeigt, dass der Lagerabschnitt 343 die Motorwelle im Betrieb ausschließlich lagert, so dass zwischen dem Antriebsabschnitt 502 und dem anzutreibenden Element 304 kein weiteres Lager zum Lagern der Motorwelle im Betrieb angeordnet ist. Lediglich, wie es z.B. anhand von Fig. 4 dargelegt worden ist, existiert ein Notlager 344, das jedoch im Betrieb nicht auf die Welle eingreift, sondern von der Welle beabstandet ist und dafür da ist, um im Falle eines Notzustandes, wie beispielsweise eines Stoßes, die Welle in Eingriff zu nehmen, damit keine zu große Auslenkung der Welle ermöglicht wird. Zwischen dem Antriebsabschnitt und dem anzutreibenden Element ist somit das Notlager angeordnet, das im Betrieb die Motorwelle oder das anzutreibende Element nicht in Eingriff nimmt, das jedoch bei einer Notsituation die Motorwelle in Eingriff nimmt, um eine Auslenkung der Motorwelle über einen Notlagerspalt hinaus zu unterbinden.

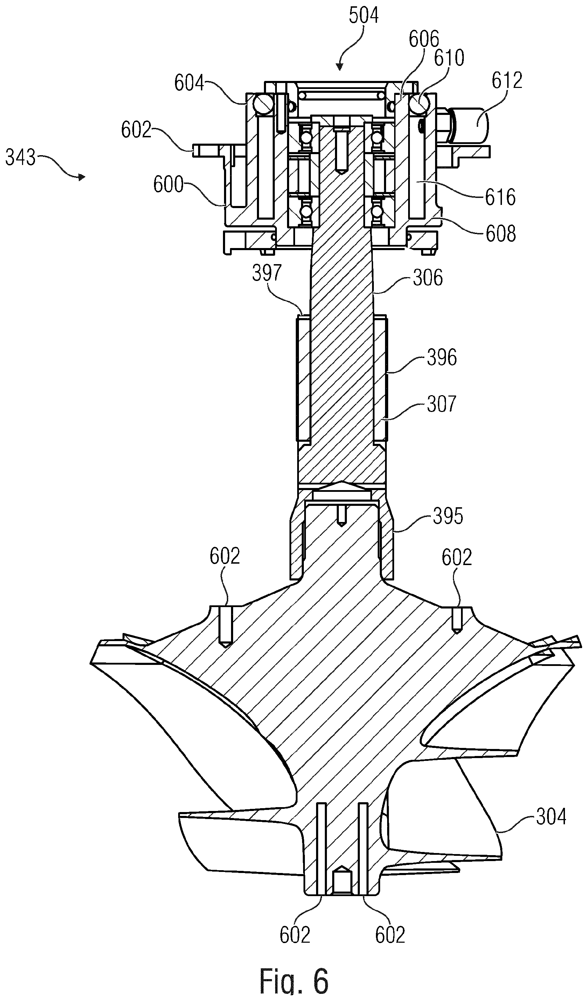

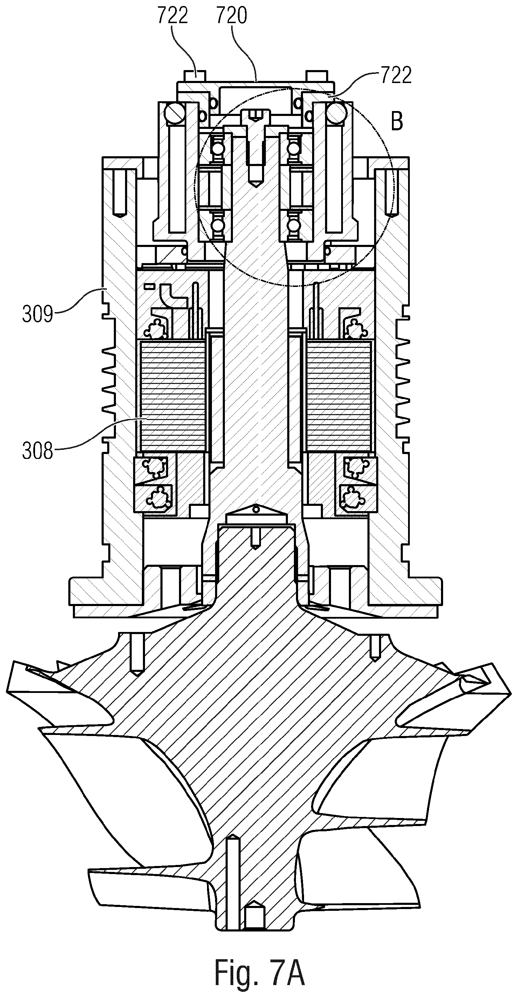

Der Rotor 307 umfasst bei einer Ausführungsform, die beispielsweise in Fig. 6 gezeigt ist, Permanentmagnete, die an der Motorwelle angebracht sind. Darüber hinaus umfasst ein Stator, wie er z.B. bei 308 in Fig. 7A gezeigt ist, Wicklungen, die mit der Motorhülle 500 verbunden sind.

Bei bevorzugten Ausführungsformen der vorliegenden Erfindung ist die Federanordnung 510 ausgebildet, um in Richtung einer translatorischen Bewegung der Achse der Motorwelle eine erste Federsteifigkeit zu haben und in Richtung einer ersten oder zweiten Kipp-Bewegung, die senkrecht zu der Drehachse ist, eine zweite Federsteifigkeit zu haben, die niedriger ist als die erste Federsteifigkeit, so dass, wie es Bezug nehmend auf Fig. 5 dargelegt worden ist, eine Kipp-Bewegung ermöglicht wird, während eine translatorische Auslenkung in Richtung der Motorwelle vermieden wird. Auf jeden Fall ist es ausreichend, dass für bestimmte Ausführungsformen die Federsteifigkeiten unterschiedlich groß sind und die Steifigkeit bezüglich der translatorischen Bewegung in der Achse entlang der Motorwelle größer ist als die Federsteifigkeit bezüglich der Kipp-Bewegungen.

Insbesondere ist in Fig. 5 gezeigt, dass der Lagerhalter 504 über zwei oder mehr längliche Federn, die z.B. bei 600 in Fig. 6 dargestellt sind, mit der Motorhülle 500 verbunden ist, wobei die Federbeine jeweils einen Federabschnitt haben, der sich parallel zur Achse der Motorwelle 306, also Bezug nehmend auf Fig. 5 parallel zur z-Achse erstreckt, wie es auch schematisch bei 510 in Fig. 5 angedeutet ist.

Je nach Implementierung sind jedoch bei einem vorzugsweise in Draufsicht kreisrunden Lagerhalter 504 die Federbeine gleichmäßig über den Umfang verteilt. Bei der Verwendung von drei Federbeinen wären dann Winkel zwischen den Federbeinen jeweils 120°, und bei der Verwendung von beispielsweise vier Federbeinen wären die Winkel 90°. Wird der Lagerhalter jedoch in Draufsicht nicht kreisförmig, sondern polygonal als Dreieck, Viereck, Fünfeck, Sechseck, etc. ausgeführt, so wird es ebenfalls bevorzugt, dass die Federbeine gleichmäßig voneinander beabstandet werden, dahin gehend, dass eine optimale Federanordnung geschaffen wird. Abweichungen von einer gleichmäßigen Anordnung sind jedoch ebenfalls möglich, solange die Kipp-Bewegungen um Achsen senkrecht zur Drehachse ermöglicht werden.

Der Elektromotor, wie er schematisch in Fig. 5 gezeigt ist, umfasst ferner eine Dämpfungsanordnung 512, durch die der Lagerhalter 504 ebenfalls mit der Motorhülle 500 verbunden ist. Die Dämpfungsanordnung 512 ist ausgebildet, um eine mechanische Schwingung, die aufgrund der Federanordnung 510 des Lagerhalters 504 bezüglich der Motorhülle 500 ermöglicht wird, zu dämpfen. Die Dämpfungsstärke der Dämpfungsanordnung 512 ist eingestellt, damit die Dämpfungsanordnung eine Resonanz des schwingenden Lagerhalters 504 unterbindet, wobei jedoch gleichzeitig die Kipp-Bewegung 514, die das rotierende System ausführen muss, um auf seiner Trägheitsachse schwingen zu können, erlaubt werden.

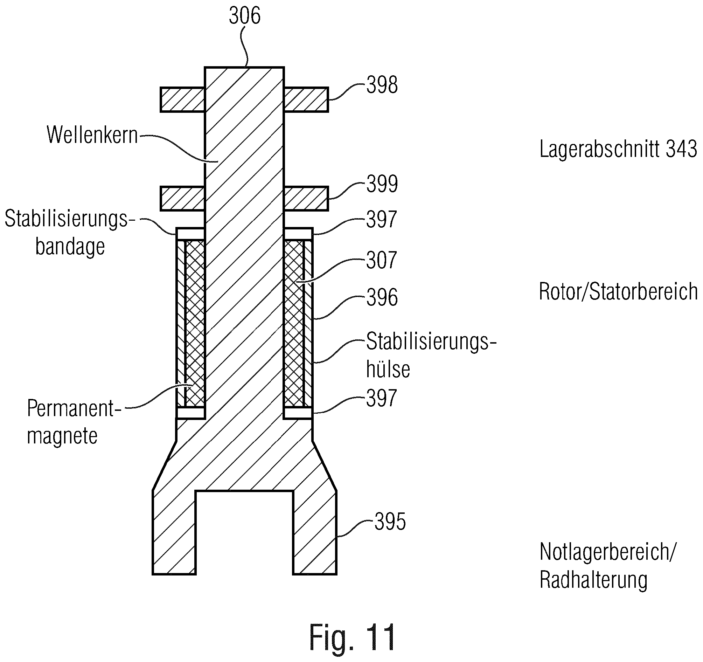

Nachfolgend wird Bezug nehmend auf Fig. 6 eine detaillierte Darstellung gegeben. Das anzutreibende Element 304 ist in Fig. 6 als Radialrad oder Impellerrad ausgeführt, welches im Querschnitt in Fig. 6 dargestellt ist. Es sind diverse Wuchtlöcher 602 dargestellt, welche typischer mit Madenschrauben versehen werden können, um das Radialrad bzw. das Radialrad samt Welle und Rotor zu wuchten. Auswuchtmaßnahmen können jedoch auch durch andere Vorkehrungen erreicht werden, wie beispielsweise durch einen Materialabtrag an einer bestimmten Stelle alternativ oder zusätzlich zu dem Gewichtseintrag aufgrund der ggf. eingesetzten Auswuchtschrauben in den Auswuchtöffnungen 602. Bei dem in Fig. 6 gezeigten Ausführungsbeispiel ist die Welle 306 aus einem unterschiedlichen Material als das Rad 304 ausgebildet. Beide Komponenten können jedoch aus demselben Material ausgebildet sein oder können auch einstückig miteinander ausgebildet sein. Bei der in Fig. 6 gezeigten Implementierung ist das Radialrad 304 aus Aluminium und ist die Welle aus Stahl gebildet. Die Halterung des Rads 304 an der Welle 306 findet über einen im Querschnitt gabelförmigen Befestigungsabschnitt 395 statt, der in Fig. 6 gezeigt ist. Auf der Welle ist im Antriebsabschnitt der Rotor 307 in Form von Permanentmagneten angeordnet, welche durch eine Stabilisierungshülse 396 und Stabilisierungsbandagen 397 gehalten werden, wie es auch Bezug nehmend auf Fig. 11 noch erläutert wird.

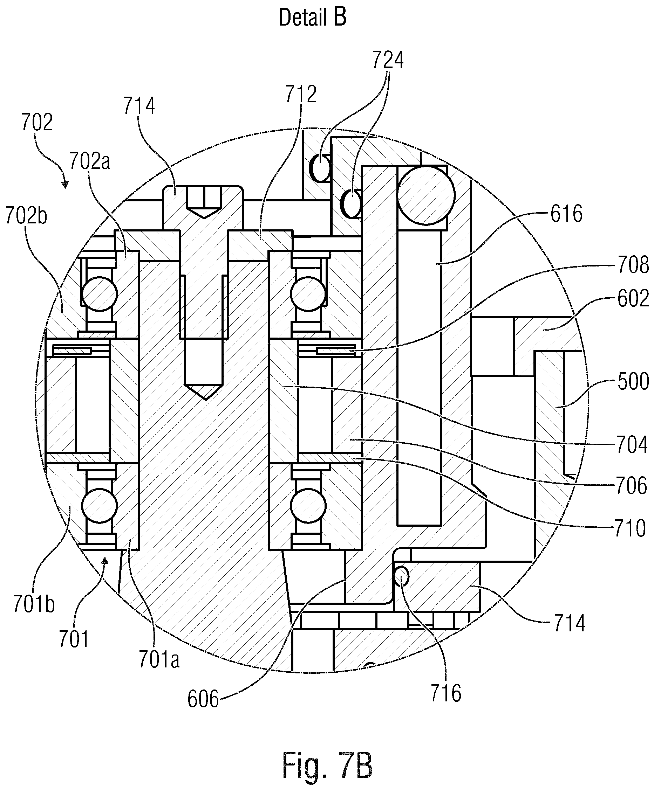

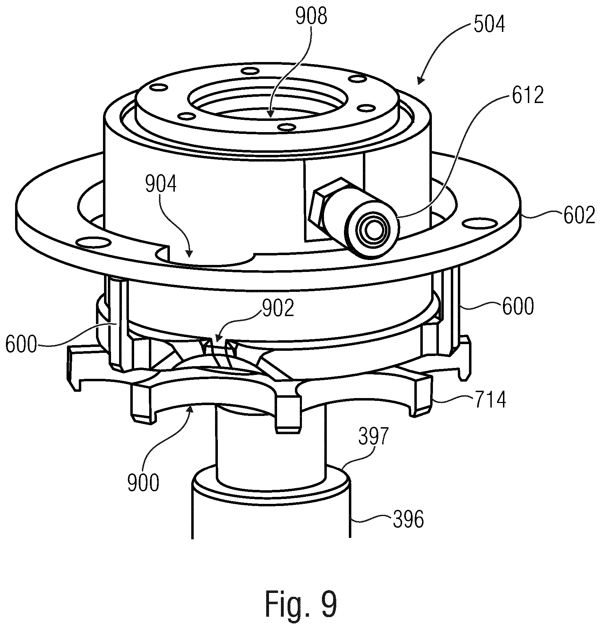

Im Lagerabschnitt 343 ist der Lagerhalter 504 gezeigt, auf den Bezug nehmend auf Fig. 7B, die eine Detaildarstellung des Lagerhalters zeigt, noch detaillierter eingegangen wird. Insbesondere ist der Lagerhalter 504 über die Federanordnung, die anhand eines Federbeins 600 dargestellt ist, mit der in Fig. 6 nicht gezeigten Motorhülle verbunden. Hierzu umfasst die Federanordnung das Federbein 600 und noch zwei weitere Federbeine 600, die im Querschnitt in Fig. 6 nicht gezeigt sind, die jedoch in Fig. 9 ersichtlich sind. Die Federbeine verbinden einen Befestigungsabschnitt 602 mit dem Lagerhalter 504. Der Befestigungsabschnitt 602 ist, wie es wieder in Fig. 9 besser zu sehen ist, als Ring ausgebildet, welcher an die Motorhülle 500 geschraubt ist, wenn der Motor fertig zusammengebaut ist.

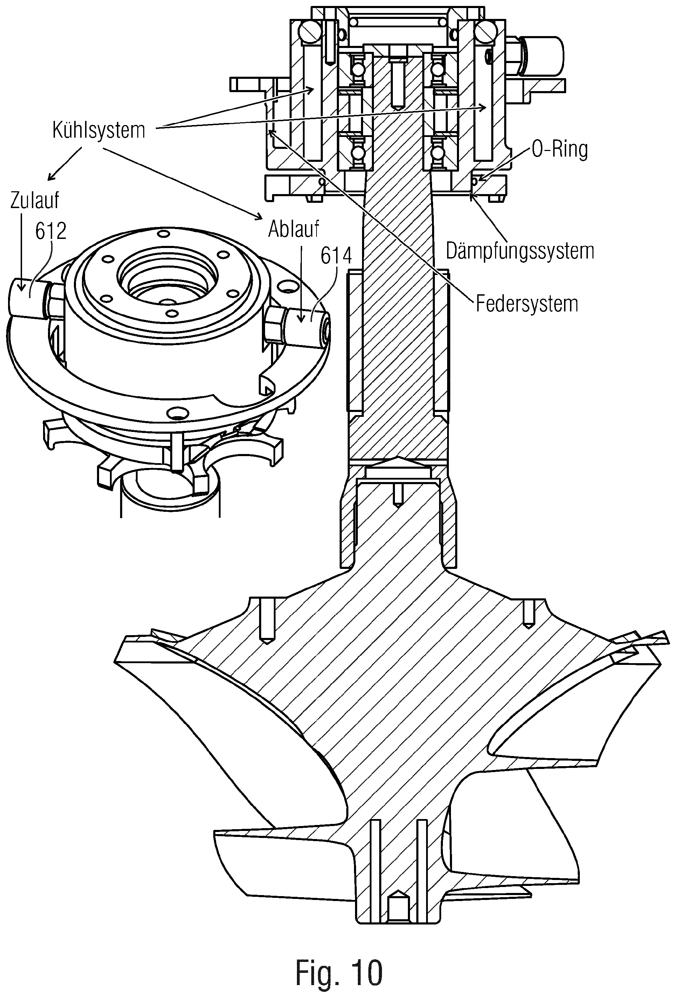

Der Lagerhalter umfasst ferner eine äußere Hülse 604 und eine innere Hülse 606. Zwischen der äußeren Hülse 604 und der inneren Hülse 606 ist ein Raum geschaffen, der nach unten durch einen Verbindungssteg abgedichtet ist, und der nach oben durch einen O-Ring 610 abgedichtet ist. Über einen Zulauf 612 kann Kühlmittel in den Lagerhalter zugeführt werden, welches durch einen Ablauf in Fig. 10 dargestellt ist, wieder aus dem Kühlungsraum herausgeführt wird. Der Ablauf ist mit 614 bezeichnet. Der Kühlungsraum 616 ist über die innere Hülse 606 mit dem inneren Lagerabschnitt verbunden, in dem bei dem in Fig. 6 dargestellten Ausführungsbeispiel zwei Kugellager angeordnet sind, nämlich, wie es in Fig. 7B in der Detailansicht dargestellt ist, ein unteres Kugellager 701 und ein oberes Kugellager 702. Das untere Kugellager 701 hat einen rotierenden Lagerabschnitt 701a und einen festen Lagerabschnitt 701b. Ferner hat das obere Lager 702 einen fester Lagerabschnitt 702b und einen rotierenden Lagerabschnitt 702a. Darüber hinaus ist in Fig. 7B der Befestigungsring 602 des Federabschnitts gezeigt, der mit der Motorhülle, von der ein kleiner Abschnitt bei 500 in Fig. 7B gezeigt ist, verbunden ist. Zwischen den beiden Lagern 701 und 702 befindet sich eine innere Abstandshülse 704 und eine äußere Abstandshülse 706. Die innere Abstandshülse 704 ist zwischen den rotierenden Teilen 701a, 702a der Lager angeordnet, während zwischen der äußeren Hülse und den festen Teilen 701b, 702b ein Federring 708 und ggf. ein weiterer Federring bzw. eine Unterlegscheibe 710 angebracht ist.

Zum Zusammenbau des Lagers wird zunächst ein Element bereitgestellt, das aus der äußeren Lagerhülse 604 und der inneren Lagerhülse 606 besteht, wobei die äußere und innere Lagerhülse unten durch die Wand 608 und oben durch den O-Ring 610 miteinander gewissermaßen verbunden und abgedichtet sind. Dann wird der Lageraufbau vorgenommen. Hierzu wird zunächst das untere Kugellager 701 in die innere Lagerhülse hineingeklebt. Dieses untere Lager bildet das Festlager. Daraufhin werden die Hülsen 704, 706, und der Federring 708 und gegebenenfalls weitere Elemente wie beispielsweise die Scheibe 710 und dann das Lager 702 in die innere Hülse in der in Fig. 7B gezeigten Reihenfolge hineingebracht. Daraufhin wird mit einem speziellen Einziehwerkzeug das erste Ende 306a der Welle 306 in den bereits derart vorbereiteten Lagerhalter hineingezogen. Zwischen der Welle und den rotierenden Abschnitten 701a, 702a der Lager existiert ein Pass-Sitz, für den typischerweise keine weiteren Befestigungen benötigt werden, wie beispielsweise Klebungen oder etwas Ähnliches.

Dann, wenn die Welle hineingezogen ist, werden die Lager befestigt, indem eine Lagerscheibe 712 durch eine Schraube 714 in einem Gewinde der Welle 306 befestigt werden. Damit werden die beiden Lager aufeinander gedrückt, wobei insbesondere die Federscheibe eine nötige Federung liefert. Durch diese Festlager/Loslager-Kombination wird sichergestellt, dass thermische Ausdehnungen der Welle ohne Weiteres aufgenommen werden können, obgleich der Abstand zwischen den beiden Kugellagern so kurz ist, dass gegebenenfalls auch mit zwei Festlagern gearbeitet werden könnte. Es wird jedoch bevorzugt, die Festlager/Loslager-Kombination, wie sie beispielsweise anhand von Fig. 7B beschrieben worden ist, zu verwenden, während andere Festlager/Loslager-Implementierungen mit anders geformten Hülsen/Federscheiben etc. ebenfalls eingesetzt werden könnten.

Fig. 7B zeigt ferner das Dämpfungssystem in Form eines Rings 714, der auch in Fig. 9 gezeigt ist und als Sternring bezeichnet werden kann. Dieser Ring 714 ist an seiner Innenkante bzw. seiner inneren Peripherie mit dem Lagerhalter 504 über einen O-Ring 716 gekoppelt. Damit wird eine Bewegung zwischen der inneren Hülse 606 und dem Ring 714 ermöglicht, wobei ferner darauf hingewiesen wird, dass der Ring 714 an seiner äußeren Peripherie mit der Motorhülle 500 verbunden ist, wie es z. B. in Fig. 7A ersichtlich ist. Dadurch, dass der O-Ring jedoch ein elastisches Element ist, für das eine Kraft benötigt wird, um den O-Ring zu deformieren bzw. zu "walken", wird die Dämpfungsfunktion der Dämpfungsanordnung 512 geschaffen. Die Dämpfungsanordnung wird somit durch den O-Ring geschaffen, der zum einen an der inneren Hülse 606 und zum anderen an dem Befestigungsring 714 bzw. dem Sternring 714 anliegt.

Die feste Motorhülle umfasst ferner eine Motorwand 309, die, wie es in Fig. 7A gezeigt ist, mit Kühlrippen versehen sein kann oder nicht. Im Bereich der Kühlrippen, die beispielsweise in Fig. 7A ersichtlich sind, ist der Antriebsabschnitt ausgebildet, also der Stator 308, in dem eine Wärmeentwicklung aufgrund des beträchtlichen Stromflusses durch die Statorwicklungen auftritt.

Darüber hinaus zeigt Fig. 7A weitere Aspekte des erfindungsgemäßen Elektromotors gemäß dem bevorzugten Ausführungsbeispiel der vorliegenden Erfindung in Form eines Deckelelements 720, das durch Schrauben 722 an der Motorhülle 500 befestigt ist, wobei jedoch ein Leerraum zwischen dem Deckel 720 und der Schraube 714 der Welle existiert, dahin gehend, dass der Deckel 720 die Drehung der Welle nicht stört. Andererseits hält der Deckel 720 zusammen mit einer weiteren Halterung 722 die festen Abschnitte 701b, 702b der Lager. Ferner ist der innere Lagerbereich durch Dichtungen 724 abgedichtet, um hermetisch dicht gegenüber Flüssigkeit und Dampf zu sein. Dies stellt sicher, dass eine für die Lager 701, 702 benötigte Lagerschmierung möglichst lang erhalten bleibt und nicht durch Flüssigkeiten oder Arbeitsdämpfe bzw. allgemein durch die äußere Umgebung beeinflusst wird. Damit wird zum einen erreicht, dass das Lager gut geschmiert ist. Andererseits wird erreicht, dass aufgrund der Wasserkühlung eine Lagerkühlung bis in den inneren Lagerbereich hinein erhalten wird, um eine möglichst lange Standzeit zu erhalten.

Um ferner eine zusätzliche Kühlfunktionalität zu haben, und zwar in Form einer konvektiven Wellenkühlung umfasst der Befestigungsring bzw. Sternring 714 Ausnehmungen 900, die ausgebildet sind, um Gas, das um die Motorhülle 500 vorhanden ist, und zwar insbesondere Arbeitsdampf, der innerhalb des Motorgehäuses 300 von Fig. 4, Fig. 3, Fig. 2 beispielsweise vorhanden ist, entlang der Welle und des Motorspalts 307 bis zum Radialrad 304 fließen zu lassen. Darüber hinaus ist eine weitere Öffnung 902 vorgesehen, die für Kabel zur Versorgung des Stators mit Strom bzw. falls vorhanden Sensorik vorgesehen ist. Ferner umfasst der Ring 602 ebenfalls eine Ausnehmung 904, durch die das Kabel, das bereits durch die Ausnehmung 902 verläuft, weiter nach oben herausgeführt werden kann. Die Kabelanordnungen sind so gewählt, dass sie außerhalb des Lagerhalters 504 verlaufen und dass insbesondere kein Kabel durch den abgedichteten hermetischen Bereich der Kugellager verläuft, der in Fig. 9 bei 908 angeordnet ist, und der dann endgültig abgedichtet ist, wenn der Deckel 720, der in Fig. 7A gezeigt ist, montiert ist.

Wie es bereits dargestellt worden ist, und wie es in Fig. 10 noch einmal erläutert wird, wird das Dämpfungssystem durch den O-Ring gebildet, der zwischen dem Lagerhalter und der Motorhülle angeordnet ist, wie es insbesondere aus Fig. 7B und auch in Fig. 10 ersichtlich ist. Dadurch wird eine Relativbewegung, die jedoch gedämpft ist, zwischen dem Lagerhalter und der Motorhülle ermöglicht, die dazu führt, dass der O-Ring elastisch verformt wird.

Ferner umfasst ein bevorzugtes Ausführungsbeispiel der vorliegenden Erfindung, wie es ebenfalls anhand von Fig. 7B dargelegt ist, das erste Lager 701 und das zweite Lager 702. Beide Lager sind bei einer Implementierung als Kugellager ausgeführt. Diese Lager können jedoch auch alternative ausgeführt werden, beispielsweise als Wälzlager oder etwas Ähnliches. Diese beiden Lager sind sehr nah voneinander beabstandet, was dazu führt, dass eine Starrkörperresonanz des Elektromotors unterhalb einer Betriebsdrehzahl des Motors ist. Der Elektromotor wird vorzugsweise so betrieben, dass er im Betrieb eine Betriebsdrehzahl hat, die höher als die Starrkörperresonanzen ist.

Eines der beiden Lager wird als Festlager und ein anderes der beiden Lager als Loslager ausgebildet, wobei es aufgrund der besseren Montierbarkeit bevorzugt wird, dass das untere Lager 701, das näher an dem Radialrad 304 ist, als Festlager ausgebildet wird, während das obere Lager 702 als Loslager ausgebildet wird.

Obgleich die Federanordnung als drei Federbeine 600 dargestellt worden ist, die sich entlang der Motorwellenachse erstrecken und somit die nötigen Federsteifigkeiten erreichen, sei darauf hingewiesen, dass auch andere Federanordnungen in Form von Spiralfedern, Blattfedern bzw. sonstigen Federn eingesetzt werden können, und dass auch Anordnungen aus Feder/Dämpfungs-Systemen eingesetzt werden können, die nicht an getrennten Positionen den Lagerhalter mit dem Gehäuse verbinden, sondern an ein und derselben Position. Wesentlich ist lediglich, dass der Lagerhalter bezüglich der Motorhülle Kipp-Bewegungen ausführen kann, wobei es ferner bevorzugt wird, dass der Lagerhalter durch die Feder bzw. Dämpfungsanordnung nicht nur axial bezüglich der Motorwelle relativ starr gehalten wird, sondern auch die radiale Position definiert, so dass Kipp-Bewegungen stattfinden, deren Zentrum innerhalb des Lagerabschnitts 343 stattfinden.

Fig. 11 zeigt einen schematischen Querschnitt durch eine Motorwelle 306, wie sie für bevorzugte Ausführungsformen einsetzbar ist. Die Motorwelle 306 umfasst einen schraffierten Kern, wie er in Fig. 11 dargestellt ist, der in seinem oberen Abschnitt, der den Lagerabschnitt 343 darstellt, von vorzugsweise zwei Kugellagern 398 und 399 gelagert ist. Weiter unten an der Welle 306 ist der Rotor mit Permanentmagneten 307 ausgebildet. Diese Permanentmagnete sind auf der Motorwelle 306 aufgesetzt und werden oben und unten durch Stabilisierungsbandagen 397 gehalten, die vorzugsweise aus Karbon sind. Ferner werden die Permanentmagnete durch eine Stabilisierungshülse 396 gehalten, die ebenfalls als Karbonhülse vorzugsweise ausgebildet ist. Diese Sicherungs- oder Stabilisierungshülse führt dazu, dass die Permanentmagnete sicher auf der Welle 306 bleiben und sich nicht aufgrund der sehr starken Fliehkräfte aufgrund der hohen Drehzahl der Welle von der Welle lösen können.

Vorzugsweise ist die Welle aus Aluminium ausgebildet und hat einen im Querschnitt gabelförmigen Befestigungsabschnitt 395, der eine Halterung für das Radialrad 304 darstellt, wenn das Radialrad 304 und die Motorwelle nicht einstückig, sondern mit zwei Elementen ausgebildet sind. Ist das Radialrad 304 mit der Motorwelle 306 einstückig ausgebildet, so ist der Radhalterungsabschnitt 395 nicht vorhanden, sondern dann schließt das Radialrad 304 unmittelbar an die Motorwelle an. In dem Bereich der Radhalterung 395 befindet sich auch, wie es aus Fig. 10 ersichtlich ist, das Notlager 344, das vorzugsweise ebenfalls aus Metall und insbesondere Aluminium ausgebildet ist.

## Patentansprüche

1. Elektromotor, mit folgenden Merkmalen:
einer Motorhülle (500);
einer Motorwelle (306) mit einem ersten Ende (306a) und einem zweiten Ende (306b);
einem Lagerabschnitt (343) zum Lagern der Motorwelle (306) bezüglich eines Lagerhalters (504), wobei der Lagerabschnitt (343) näher an dem ersten Ende (306a) als an dem zweiten Ende (306b) an der Motorwelle (306) angebracht ist;
einem anzutreibenden Element (304), das an oder näher an dem zweiten Ende (306b) als an dem ersten Ende (306a) der Motorwelle (306) angebracht ist; und
einem Antriebsabschnitt (502), der zwischen dem Lagerabschnitt (343) und dem anzutreibenden Element (304) angeordnet ist und einen Rotor (307) und einen Stator (308) aufweist,
**gekennzeichnet dadurch, dass** der Lagerhalter (504) mit der Motorhülle (500) über eine Federanordnung (510) gekoppelt ist, wobei die Federanordnung (510) ausgebildet ist, um eine Kipp-Auslenkung (514) des Lagerhalters (504) bezüglich der Motorhülle (500) um wenigstens eine Kipp-Achse, die senkrecht zu einer Achse der Motorwelle (306) ist, zu erlauben.

2. Elektromotor nach Anspruch 1,
bei dem der Lagerabschnitt (343) die Motorwelle (306) im Betrieb ausschließlich lagert, so dass zwischen dem Antriebsabschnitt (502) und dem anzutreibenden Element (304) kein weiteres Lager zum Lagern der Motorwelle (306) im Betrieb angeordnet ist.

3. Elektromotor nach Anspruch 1 oder 2,
bei dem zwischen dem Antriebsabschnitt (502) und dem anzutreibenden Element (304) ein Notlager (344) mit einem Notlagerspalt angeordnet ist, das im Betrieb die Motorwelle (306) oder das anzutreibende Element (304) nicht in Eingriff nimmt, das jedoch bei einer Notsituation die Motorwelle (306) in Eingriff nimmt, um eine Auslenkung der Motorwelle (306) über den Notlagerspalt hinaus zu unterbinden.

4. Elektromotor nach einem der vorhergehenden Ansprüche,
bei dem die Federanordnung (510) ausgebildet ist, um in Richtung einer translatorischen Bewegung der Achse der Motorwelle (306) eine erste Federsteifigkeit zu haben, und um in Richtung einer ersten oder zweiten Kipp-Bewegung, die senkrecht zu der Drehachse ist, eine zweite Federsteifigkeit zu haben, die niedriger ist als die erste Federsteifigkeit.

5. Elektromotor nach einem der vorhergehenden Ansprüche,
bei dem der Lagerhalter (504) über zwei oder mehrere längliche Federn (600) mit dem Motorgehäuse verbunden ist, wobei die länglichen Federn Federbeine haben, die einen Federabschnitt bilden, der sich parallel zur Achse der Motorwelle (306) erstreckt.

6. Elektromotor nach einem der vorhergehenden Ansprüche,
der ferner eine Dämpfungsanordnung (512) aufweist, durch die der Lagerhalter (504) mit der Motorhülle (500) gekoppelt ist, wobei die Dämpfungsanordnung (512) ausgebildet ist, um eine mechanische Schwingung, die aufgrund der Federanordnung (510) ermöglicht ist, zu dämpfen.

7. Elektromotor nach Anspruch 6,
bei dem die Dämpfungsanordnung (512) ein Dämpfungselement aufweist, das zwischen der Motorhülle (500) und dem Lagerhalter (504) derart angeordnet ist, dass dasselbe bei einer Relativbewegung des Lagerhalters (504) und der Motorhülle (500) elastisch verformt wird.

8. Elektromotor nach Anspruch 7, bei dem das Dämpfungselement ein elastischer O-Ring ist.

9. Elektromotor nach einem der vorhergehenden Ansprüche,
bei dem der Lagerabschnitt (343) ein erstes Lager (701) und ein beabstandetes zweites Lager (702) aufweist.

10. Elektromotor nach Anspruch 9,
bei dem das erste Lager (701) und das zweite Lager (702) so voneinander beabstandet sind, dass eine Starrkörperresonanz des Elektromotors unterhalb einer Betriebsdrehzahl des Elektromotors ist, und
bei der der Elektromotor ausgebildet ist, um im Betrieb bei der Betriebsdrehzahl betrieben zu werden.

11. Elektromotor nach einem der vorhergehenden Ansprüche,
bei dem der Lagerhalter (504) einen Haltering (722) aufweist, der an dem Lagerhalter (504) derart befestigt ist, dass er auf einen festen Abschnitt (702b, 701b) mindestens eines Lagers eine Druckkraft ausübt, um den festen Abschnitt (702b, 701b) des mindestens einen Lagers an dem Lagerhalter (504) zu halten.

12. Elektromotor nach einem der Ansprüche 6 bis 8,
bei dem die Motorhülle (500) einen Ring (714) aufweist, der an einem äußeren Bereich desselben fest mit der Motorhülle (500) verbunden ist und an einem inneren Bereich desselben mit einem Dämpfungselement (716) Eingriff nimmt, wobei das Dämpfungselement ferner mit dem Lagerhalter (504) Eingriff nimmt.

13. Wärmepumpe mit folgenden Merkmalen:
einem Verdampfer;
einem Kondensierer; und
einem Verdichter, der den Elektromotor nach einem der vorhergehenden Ansprüche 1 bis 12 aufweist, wobei das anzutreibende Element (304) ein Impellerrad ist, und wobei der Elektromotor so angeordnet ist, dass das Impellerrad im Betrieb des Elektromotors Dampf aus dem Verdampfer ansaugt und komprimierten Dampf in den Kondensierer abgibt.

14. Verfahren zum Herstellen eines Elektromotors mit: einer Motorhülle (500); einer Motorwelle (306) mit einem ersten Ende (306a) und einem zweiten Ende (306b); einem Lagerabschnitt (343) zum Lagern der Motorwelle (306) bezüglich eines Lagerhalters (504), wobei der Lagerabschnitt (343) näher an dem ersten Ende (306a) als an dem zweiten Ende (306b) an der Motorwelle (306) angebracht ist; einem anzutreibenden Element (304), das an oder näher an dem zweiten Ende (306b) als an dem ersten Ende (306a) der Motorwelle (306) angebracht ist; und einem Antriebsabschnitt (502), der zwischen dem Lagerabschnitt (343) und dem anzutreibenden Element (304) angeordnet ist und einen Rotor (307) und einen Stator (308) aufweist, **gekennzeichnet durch** den folgenden Schritt:
Koppeln des Lagerhalters (504) mit der Motorhülle (500) über eine Federanordnung (510), wobei die Federanordnung (510) ausgebildet ist, um eine Kipp-Auslenkung (514) des Lagerhalters (504) bezüglich der Motorhülle (500) um wenigstens eine Kipp-Achse, die senkrecht zu einer Achse der Motorwelle (306) ist, zu erlauben.

15. Verfahren zum Betreiben eines Elektromotors mit: einer Motorhülle (500); einer Motorwelle (306) mit einem ersten Ende (306a) und einem zweiten Ende (306b); einem Lagerabschnitt (343) zum Lagern der Motorwelle bezüglich eines Lagerhalters (504), wobei der Lagerabschnitt (343) näher an dem ersten Ende (306a) als an dem zweiten Ende (306b) an der Motorwelle (306) angebracht ist; einem anzutreibenden Element (304), das an oder näher an dem zweiten Ende (306b) als an dem ersten Ende (306a) der Motorwelle (306) angebracht ist; und einem Antriebsabschnitt (502), der zwischen dem Lagerabschnitt (343) und dem anzutreibenden Element (304) angeordnet ist und einen Rotor (307) und einen Stator (308) aufweist, **gekennzeichnet durch** folgenden Schritt:
Erlauben, durch eine Federanordnung (510), durch die der Lagerhalter (504) mit der Motorhülle (500) gekoppelt ist, einer Kipp-Auslenkung (514) des Lagerhalters (504) bezüglich der Motorhülle (500) um wenigstens eine Kipp-Achse, die senkrecht zu einer Achse der Motorwelle (306) ist.

## Claims

1. An electric motor having the following features:
a motor shell (500);
a motor shaft (306) with a first end (306a) and a second end (306b);
a bearing portion (343) for supporting the motor shaft (306) relative to a bearing mount (504), wherein the bearing portion (343) is attached to the motor shaft (306) closer to the first end (306a) than to the second end (306b);
an element (304) to be driven, which is attached to or closer to the second end (306b) than to the first end (306a) of the motor shaft (306); and
a drive portion (502), which is disposed between the bearing portion (343) and the element (304) to be driven and has a rotor (307) and a stator (308),
**characterized in that**
the bearing mount (504) is coupled to the motor shell (500) via a spring assembly (510), wherein the spring assembly (510) is configured to allow a tilt deflection (514) of the bearing mount (504) relative to the motor shell (500) about at least one tilt axis, which is perpendicular to an axis of the motor shaft (306).

2. The electric motor according to claim 1,
in which the bearing portion (343) supports exclusively the motor shaft (306) in operation, so that no further bearing for supporting the motor shaft (306) in operation is disposed between the drive portion (502) and the element (304) to be driven.

3. The electric motor according to claim 1 or 2,
in which an emergency bearing (344) with an emergency bearing gap is disposed between the drive portion (502) and the element (304) to be driven and in operation does not enter into engagement with the motor shaft (306) or the element (304) to be driven, but in an emergency situation enters into engagement with the motor shaft (306) in order to prevent a deflection of the motor shaft (306) beyond the emergency bearing gap.

4. The electric motor according to any one of the preceding claims,
in which the spring assembly (510) is configured to have a first spring stiffness in the direction of a translatory movement of the axis of the motor shaft (306) and to have a second spring stiffness, which is lower than the first spring stiffness, in the direction of a first or second tilt movement, which is perpendicular to the axis of rotation.

5. The electric motor according to any one of the preceding claims,
in which the bearing mount (504) is connected to the motor housing via two or more elongate springs (600), wherein the elongate springs have spring legs, which form a spring portion which extends parallel to the axis of the motor shaft (306).

6. The electric motor according to any one of the preceding claims,
which further has a damping assembly (512), by which the bearing mount (504) is coupled to the motor shell (500), wherein the damping assembly (512) is configured to damp a mechanical vibration that is made possible on account of the spring assembly (510).

7. The electric motor according to claim 6,
in which the damping assembly (512) has a damping element, which is disposed between the motor shell (500) and the bearing mount (504) in such a way that it is elastically deformed in the event of a relative movement of the bearing mount (504) and the motor shell (500).

8. The electric motor according to claim 7,
in which the damping element is an elastic O-ring.

9. The electric motor according to any one of the preceding claims,
in which the bearing portion (343) has a first bearing (701) and a spaced-apart second bearing (702).

10. The electric motor according to claim 9,
in which the first bearing (701) and the second bearing (702) are spaced apart from one another such that a rigid body resonance of the electric motor is below an operating speed of the electric motor, and
in which the electric motor is configured, in operation, to be operated at the operating speed.

11. The electric motor according to any one of the preceding claims,
in which the bearing mount (504) has a retaining ring (722), which is secured to the bearing mount (504) in such a way that it exerts a compressive force on a fixed portion (702b, 701b) of at least one bearing in order to hold the fixed portion (702b, 701b) of the at least one bearing on the bearing mount (504).

12. The electric motor according to any one of claims 6 to 8,
in which the motor shell (500) has a ring (714), which, at an outer region thereof, is fixedly connected to the motor shell (500) and, at an inner region thereof, engages with a damping element (716), wherein the damping element further engages with the bearing mount (504).

13. A heat pump having the following features:
an evaporator;
a condenser; and
a compressor, which comprises the electric motor according to any one of preceding claims 1 to 12, wherein the element (304) to be driven is an impeller wheel, and wherein the electric motor is disposed such that the impeller wheel during operation of the electric motor sucks in vapour from the evaporator and delivers compressed vapour into the condenser.

14. A method for producing an electric motor having: a motor shell (500); a motor shaft (306) with a first end (306a) and a second end (306b); a bearing portion (343) for supporting the motor shaft (306) relative to a bearing mount (504), wherein the bearing portion (343) is attached to the motor shaft (306) closer to the first end (306a) than to the second end (306b); an element (304) to be driven, which is attached to or closer to the second end (306b) than to the first end (306a) of the motor shaft (306); and a drive portion (502), which is disposed between the bearing portion (343) and the element (304) to be driven and has a rotor (307) and a stator (308),
**characterized by** the following step:
coupling the bearing mount (504) to the motor shell (500) via a spring assembly (510), wherein the spring assembly (510) is configured to allow a tilt deflection (514) of the bearing mount (504) relative to the motor shell (500) about at least one tilt axis, which is perpendicular to an axis of the motor shaft (306).

15. A method for operating an electric motor having: a motor shell (500); a motor shaft (306) with a first end (306a) and a second end (306b); a bearing portion (343) for supporting the motor shaft (306) relative to a bearing mount (504), wherein the bearing portion (343) is attached to the motor shaft (306) closer to the first end (306a) than to the second end (306b); an element (304) to be driven, which is attached to or closer to the second end (306b) than to the first end (306a) of the motor shaft (306); and a drive portion (502), which is disposed between the bearing portion (343) and the element (304) to be driven and has a rotor (307) and a stator (308),
**characterized by** the following step:
allowing, by a spring assembly (510) by which the bearing mount (504) is coupled to the motor shell (500), a tilt deflection (514) of the bearing mount (504) relative to the motor shell (500) about at least one tilt axis, which is perpendicular to an axis of the motor shaft (306).

## Revendications

1. Moteur électrique, ayant les caractéristiques suivantes :
une enveloppe de moteur (500) ;
un arbre de moteur (306) ayant une première extrémité (306a) et une deuxième extrémité (306b) ;
une section de palier (343) pour supporter l'arbre de moteur (306) par rapport à un support de palier (504), la section de palier (343) étant montée sur l'arbre de moteur (306) plus près de la première extrémité (306a) que de la deuxième extrémité (306b) ;
un élément à entraîner (304) monté au niveau de la deuxième extrémité (306b) ou plus près de celle-ci que de la première extrémité (306a) de l'arbre de moteur (306) ; et
une section d'entraînement (502) agencée entre la section de palier (343) et l'élément à entraîner (304) et présentant un rotor (307) et un stator (308),
**caractérisé en ce que**
le support de palier (504) est couplé à l'enveloppe de moteur (500) par l'intermédiaire d'un agencement de ressort (510), l'agencement de ressort (510) étant réalisé pour permettre une déviation basculante (514) du support de palier (504) par rapport à l'enveloppe de moteur (500) autour d'au moins un axe de basculement qui est perpendiculaire à un axe de l'arbre de moteur (306).

2. Moteur électrique selon la revendication 1,
dans lequel la section de palier (343) supporte exclusivement l'arbre de moteur (306) en fonctionnement, de telle sorte qu'aucun autre palier n'est agencé entre la section d'entraînement (502) et l'élément à entraîner (304) pour supporter l'arbre de moteur (306) en fonctionnement.

3. Moteur électrique selon la revendication 1 ou 2,
dans lequel un palier de secours (344) ayant un espace de palier de secours est agencé entre la section d'entraînement (502) et l'élément à entraîner (304), lequel palier de secours n'est pas en prise avec l'arbre de moteur (306) ou l'élément à entraîner (304) en fonctionnement, mais qui, en cas d'urgence, vient en prise avec l'arbre de moteur (306) afin d'empêcher une déviation de l'arbre de moteur (306) au-delà de l'espace de palier de secours.

4. Moteur électrique selon l'une quelconque des revendications précédentes,
dans lequel l'agencement de ressort (510) est réalisé pour avoir une première rigidité de ressort dans la direction d'un mouvement de translation de l'axe de l'arbre de moteur (306) et pour avoir, dans la direction d'un premier ou d'un deuxième mouvement de basculement perpendiculaire à l'axe de rotation, une deuxième rigidité de ressort inférieure à la première rigidité de ressort.

5. Moteur électrique selon l'une quelconque des revendications précédentes,
dans lequel le support de palier (504) est relié au carter de moteur par l'intermédiaire de deux ressorts allongés (600) ou plus, les ressorts allongés ayant des branches de ressort qui forment une section de ressort s'étendant parallèlement à l'axe de l'arbre de moteur (306).

6. Moteur électrique selon l'une quelconque des revendications précédentes,
qui présente en outre un agencement d'amortissement (512) par lequel le support de palier (504) est couplé à l'enveloppe de moteur (500), l'agencement d'amortissement (512) étant réalisé pour amortir une vibration mécanique rendue possible en raison de l'agencement de ressort (510).

7. Moteur électrique selon la revendication 6,
dans lequel l'agencement d'amortissement (512) présente un élément d'amortissement qui est agencé entre l'enveloppe de moteur (500) et le support de palier (504) de telle sorte qu'il se déforme élastiquement lors d'un mouvement relatif du support de palier (504) et de l'enveloppe du moteur (500).

8. Moteur électrique selon la revendication 7, dans lequel l'élément d'amortissement est un joint torique élastique.

9. Moteur électrique selon l'une quelconque des revendications précédentes,
dans lequel la section de palier (343) présente un premier palier (701) et un deuxième palier (702) espacé.

10. Moteur électrique selon la revendication 9,
dans lequel le premier palier (701) et le deuxième palier (702) sont espacés l'un de l'autre de telle sorte qu'une résonance de corps rigide du moteur électrique soit inférieure à une vitesse de rotation de fonctionnement du moteur électrique, et dans lequel le moteur électrique est réalisé pour, en fonctionnement, fonctionner à la vitesse de rotation de fonctionnement.

11. Moteur électrique selon l'une quelconque des revendications précédentes,
dans lequel le support de palier (504) présente une bague de maintien (722) qui est fixée au support de palier (504) de manière à exercer une force de pression sur une section fixe (702b, 701b) d'au moins un palier afin de maintenir la section fixe (702b, 701b) de l'au moins un palier sur le support de palier (504).

12. Moteur électrique selon l'une quelconque des revendications 6 à 8,
dans lequel l'enveloppe de moteur (500) présente une bague (714) qui est reliée de manière fixe à l'enveloppe de moteur (500) au niveau d'une zone extérieure de celle-ci et qui est en prise avec un élément d'amortissement au niveau d'une zone intérieure de celui-ci (716), l'élément d'amortissement étant en outre en prise avec le support de palier (504).

13. Pompe à chaleur, présentant les caractéristiques suivantes :
un évaporateur ;
un condenseur ; et
un compresseur, qui présente le moteur électrique selon l'une quelconque des revendications 1 à 12 précédentes, l'élément à entraîner (304) étant une roue à aubes, et le moteur électrique étant agencé de telle sorte qu'en fonctionnement du moteur électrique, la roue à aubes aspire de la vapeur provenant de l'évaporateur et délivre de la vapeur comprimée au condenseur.

14. Procédé de fabrication d'un moteur électrique comprenant : une enveloppe de moteur (500) ; un arbre de moteur (306) ayant une première extrémité (306a) et une deuxième extrémité (306b) ; une section de palier (343) pour supporter l'arbre de moteur (306) par rapport à un support de palier (504), la section de palier (343) étant montée sur l'arbre de moteur (306) plus près de la première extrémité (306a) que de la deuxième extrémité (306b) ; un élément à entraîner (304) monté au niveau de la deuxième extrémité (306b) ou plus près de celle-ci que de la première extrémité (306a) de l'arbre de moteur (306) ; et une section d'entraînement (502) agencée entre la section de palier (343) et l'élément à entraîner (304) et présentant un rotor (307) et un stator (308),
**caractérisé par** l'étape suivante:
le couplage du support de palier (504) à l'enveloppe de moteur (500) par l'intermédiaire d'un agencement de ressort (510), l'agencement de ressort (510) étant réalisé pour permettre une déviation basculante (514) du support de palier (504) par rapport à l'enveloppe de moteur (500) autour d'au moins un axe de basculement qui est perpendiculaire à un axe de l'arbre de moteur (306).

15. Procédé pour faire fonctionner un moteur électrique comprenant : une enveloppe de moteur (500) ; un arbre de moteur (306) ayant une première extrémité (306a) et une deuxième extrémité (306b) ; une section de palier (343) pour supporter le moteur par rapport à un support de palier (504), la section de palier (343) étant montée sur l'arbre de moteur (306) plus près de la première extrémité (306a) que de la deuxième extrémité (306b) ; un élément à entraîner (304) monté au niveau de la deuxième extrémité (306b) ou plus près de celle-ci que de la première extrémité (306a) de l'arbre de moteur (306) ; et une section d'entraînement (502) agencée entre la section de palier (343) et l'élément à entraîner (304) et présentant un rotor (307) et un stator (308),
**caractérisé par** l'étape suivante :
le fait de permettre, par un agencement de ressort (510) par lequel le support de palier (504) est couplé à l'enveloppe de moteur (500), une déviation basculante (514) du support de palier (504) par rapport à l'enveloppe de moteur (500) autour d'au moins un axe de basculement qui est perpendiculaire à un axe de l'arbre de moteur (306).
